# EUROPEAN PATENT APPLICATION

(11) **EP 4 840 576 A1**
(43) Date of publication of application: **18.11.2026**
(21) Application number: 24921208.5
(22) Date of filing: 09.05.2024
(51) Int. Cl.: B23K 26/21

(54) **WELDING METHOD AND WELDING SYSTEM FOR TERMINAL POSTS**

(30) Priority: 01.02.2024 CN 202410143662
(71) Applicant: Contemporary Amperex Technology Co., Limited, Ningde, Fujian 352100 (CN)
(72) Inventor: LI, Yingjun, Ningde, Fujian 352100 (CN); YANG, Shaojun, Ningde, Fujian 352100 (CN); ZHAO, Qiangguo, Ningde, Fujian 352100 (CN); ZHENG, Shixiong, Ningde, Fujian 352100 (CN); QI, Congcheng, Ningde, Fujian 352100 (CN)
(74) Representative: Aera A/S
(86) International application number: PCT/CN2024/091931
(87) International publication number: WO 2025/161165

(57) **Abstract**

The present disclosure provides a welding method and welding system for terminal posts, said welding system comprising a control apparatus, a manufacturing execution system, and a welding device. The control apparatus is used for, when a first target verification result represents that verification is successful and a downward pressing result of a pressing plate mechanism in the welding device represents that downward pressing is completed, sending to the welding device target welding coordinates of each terminal post. The downward pressing result of the pressing plate mechanism is determined on the basis of height feature information of the pressing plate mechanism and height feature information of bus assemblies corresponding to a plurality of terminal posts, and the target welding coordinates of a terminal post are determined on the basis of first terminal post coordinates of said terminal post in a welding station coordinate system and the height feature information of the bus assembly corresponding to said terminal post. The welding device is used for, on the basis of the target welding coordinates of each terminal post, welding each terminal post and the corresponding bus assembly.

## Description

### CROSS-REFERENCE TO RELATED APPLICATIONS

The present disclosure claims priority to Chinese Patent Application No. 202410143662.8, filed on February 01, 2024, and entitled "WELDING METHOD AND WELDING SYSTEM FOR TERMINAL POSTS", which is incorporated herein by reference in its entirety.

### TECHNICAL FIELD

The present disclosure relates to, but is not limited to, the field of battery production technologies, and in particular, to a welding method and welding system for terminal posts.

### BACKGROUND

In the related art, a plurality of battery cells are usually assembled together, and busbar assemblies are connected to positive and negative terminal posts of the battery cells by welding. However, during the welding process, welding quality problems such as false welding and off-center welding may occur.

### SUMMARY

Embodiments of the present disclosure provide a welding method and welding system for terminal posts.

Technical solutions in the embodiments of the present disclosure are implemented as follows:
An embodiment of the present disclosure provides a welding system for terminal posts, the welding system including a control apparatus, a manufacturing execution system, and a welding device, where
the control apparatus is configured to send identification information corresponding to a to-be-welded battery to the manufacturing execution system; where the to-be-welded battery includes a plurality of terminal posts;
the manufacturing execution system is configured to determine a first target verification result of the to-be-welded battery based on the identification information corresponding to the to-be-welded battery, and send verification information to the control apparatus; where the verification information includes one of the following: a first target verification result indicating verification failure, a first target verification result indicating verification success, and association information of the to-be-welded battery, and the association information of the to-be-welded battery is determined based on a blueprint corresponding to the to-be-welded battery;
the control apparatus is further configured to: in a case that the first target verification result indicates verification success and a downward pressing result of a pressing plate mechanism in the welding device indicates that downward pressing is completed, send target welding coordinates of each of the terminal posts to the welding device; where the downward pressing result of the pressing plate mechanism is determined based on height feature information of the pressing plate mechanism and height feature information of busbar assemblies corresponding to the plurality of terminal posts, the target welding coordinates of the terminal post are determined based on first terminal post coordinates of the terminal post in a welding station coordinate system and the height feature information of the busbar assembly corresponding to the terminal post, and the first terminal post coordinates of the terminal post in the welding station coordinate system are determined based on the association information of the to-be-welded battery; and
the welding device is configured to separately weld each of the terminal posts and a corresponding busbar assembly based on the target welding coordinates of the terminal post.

In the embodiments of the present disclosure, first, the to-be-welded battery is verified (for example, type or station) by the manufacturing execution system to improve accuracy of the verification result, so that when the verification is successful, subsequent production processes are performed accurately and efficiently based on the association information of the to-be-welded battery (for example, dimensions, or the number and positions of mark points), thereby improving battery production efficiency; second, the downward pressing result of the pressing plate mechanism is comprehensively determined based on the height feature information of the pressing plate mechanism of the welding device and the height feature information of each busbar assembly, which improves accuracy of the downward pressing result, thereby improving welding precision; third, welding of the busbar assemblies and the terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward; finally, the target welding coordinates of each terminal post are separately determined based on the height feature information of each busbar assembly and the terminal post coordinates of each terminal post, which improves accuracy of the welding coordinates, thereby reducing the possibility of false welding, missed welding, and the like caused by tolerances of the terminal posts in various directions, further improving welding quality and battery yield rate, and meeting production requirements of high timeliness and high efficiency.

In some implementations, the welding device further includes a welding moving mechanism and a detection mechanism, where the pressing plate mechanism is configured to press against the busbar assemblies corresponding to the plurality of terminal posts, so that at least one busbar assembly is closely attached to the corresponding terminal post respectively; the detection mechanism is configured to acquire the height feature information of the pressing plate mechanism and the height feature information of the at least one busbar assembly; and the welding moving mechanism is configured to, in a case that the downward pressing result of the pressing plate mechanism indicates that downward pressing is completed, weld each of the terminal posts and the corresponding busbar assembly based on the target welding coordinates of the terminal post.

In the embodiments of the present disclosure, on one hand, after the pressing plate mechanism presses against the busbar assemblies, the detection mechanism acquires the height feature information of the pressing plate mechanism and the height feature information of each busbar assembly, which improves accuracy and validity of various height feature information; on the other hand, in a case that the downward pressing result of the pressing plate mechanism indicates that downward pressing is completed, the welding moving mechanism performs welding of the busbar assemblies and the terminal posts, which reduces the possibility of false welding, missed welding, and the like caused by the pressing plate mechanism being pressed off-center or not being fully pressed downward, thereby improving welding quality and battery yield rate, and meeting production requirements of high timeliness and high efficiency.

In some implementations, the pressing plate mechanism includes at least one pressing nozzle assembly, the number of pressing nozzle assemblies matches the number of terminal posts, the pressing nozzle assembly includes a pressing plate, a pressing nozzle, and a buffer member, the pressing nozzle is configured to press against a corresponding busbar assembly, the height feature information of the pressing plate mechanism includes height feature information of each pressing plate and height feature information of each pressing nozzle. The pressing plate is provided with a first through hole, and the first through hole is configured to allow the detection mechanism to enter the first through hole to acquire the height feature information of the pressing plate and the height feature information of the pressing nozzle. The pressing nozzle is provided with a second through hole communicating with a corresponding first through hole, and the second through hole is configured to allow the detection mechanism to enter the first through hole to acquire the height feature information of the corresponding busbar assembly. The buffer member is disposed between the pressing nozzle and the pressing plate, and is capable of expanding and contracting along a pressing direction of the pressing nozzle.

In the embodiments of the present disclosure, on one hand, the pressing nozzle is expanded and contracted along the pressing direction through the buffer member, which can better adapt to changes in the welding position of the battery along the pressing direction, thereby facilitating close attachment of the terminal post and the busbar assembly under the force of the pressing nozzle, and improving welding quality; on the other hand, the design of each through hole not only provides passages for the detection mechanism and the welding moving mechanism to operate, but also reduces the possibility of high-temperature foreign matters splashed during the welding process adhering to a galvanometer, thereby protecting the galvanometer and extending the service life of the galvanometer.

In some implementations, the detection mechanism includes a profilometer and a light source, where the light source is configured to provide light during a scanning process of the profilometer; and the profilometer is configured to emit laser light to acquire the height feature information of the pressing plate mechanism and the height feature information of the at least one busbar assembly.

In the embodiments of the present disclosure, on one hand, the light source provides light when the profilometer scans, so as to improve clarity of the scanning result; on the other hand, the height feature information of the pressing plate mechanism and that of each busbar assembly are acquired through the profilometer, which, compared to point-by-point scanning using a rangefinder, not only improves scanning efficiency, but also can more comprehensively and accurately reflect a contour status of the scanned object, meeting scanning requirements of high precision and high speed, thereby improving accuracy of welding coordinates.

In some implementations, the welding device further includes at least one of the following: a conveying mechanism, configured to convey the to-be-welded battery to a welding area; a first positioning mechanism, configured to fix the to-be-welded battery in the welding area; a second positioning mechanism, configured to fix at least one busbar assembly on a corresponding terminal post; and a visual acquisition mechanism, configured to acquire an image of a mark point corresponding to the to-be-welded battery, where the image is used for determining first terminal post coordinates of each of the terminal posts in the welding station coordinate system.

In the embodiments of the present disclosure, first, the to-be-welded battery is fixed to the to-be-welded welding area by the first positioning mechanism, which meets the fixing requirements of different types of batteries and reduces the possibility of the battery moving during the welding process, thereby facilitating improvement of welding stability and implementing flexible welding operations. Second, the busbar assemblies are fixed on the terminal posts through the second positioning mechanism, which reduces the possibility of false welding, off-center welding, and the like caused by movement of the busbar assemblies during the welding process. Third, the visual acquisition mechanism acquires only the image of the mark points to accurately determine the terminal post coordinates of each terminal post in the welding station coordinate system, without the need to capture images of the terminal posts one by one to determine the terminal post coordinates of each terminal post in the welding station coordinate system, which ensures accuracy of the terminal post coordinates while improving determination efficiency. Finally, through cooperation between the conveying mechanism, the positioning mechanisms, the pressing plate mechanism, and the welding moving mechanism, the battery can be welded smoothly, which improves welding efficiency while improving welding quality.

An embodiment of the present disclosure provides a welding method for terminal posts, applied to a control apparatus, where the welding method includes:
controlling a detection mechanism to acquire height feature information of a pressing plate mechanism and height feature information of at least one busbar assembly; where each of the busbar assemblies is separately fixed on one pair of terminal posts of a to-be-welded battery;
determining a downward pressing result of the pressing plate mechanism based on the height feature information of the pressing plate mechanism and the height feature information of the at least one busbar assembly;
in a case that the downward pressing result of the pressing plate mechanism indicates that downward pressing is completed, for each terminal post, determining target welding coordinates of the terminal post based on first terminal post coordinates of the terminal post in a welding station coordinate system and height feature information of a busbar assembly corresponding to the terminal post; and
sending the target welding coordinates of each terminal post to a welding moving mechanism, so that the welding moving mechanism separately welds each terminal post and the corresponding busbar assembly based on the target welding coordinates of each terminal post.

In the embodiments of the present disclosure, first, the downward pressing result of the pressing plate mechanism is comprehensively determined based on the height feature information of the pressing plate mechanism and the height feature information of the busbar assemblies, which improves accuracy of the downward pressing result, thereby improving welding precision. Second, welding of the busbar assemblies and the terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward. Finally, the target welding coordinates of each terminal post are separately determined based on the height feature information of each busbar assembly and the terminal post coordinates of each terminal post, which improves accuracy of the welding coordinates, thereby reducing the possibility of false welding, missed welding, and the like caused by tolerances of the terminal posts in various directions, further improving welding quality and battery yield rate, and meeting production requirements of high timeliness and high efficiency.

In some implementations, the pressing plate mechanism includes at least one pressing nozzle assembly, the number of pressing nozzle assemblies matches the number of terminal posts, the pressing nozzle assembly includes a pressing plate, a pressing nozzle, and a buffer member, the height feature information of the pressing plate mechanism includes height feature information of each pressing plate and height feature information of each pressing nozzle. The determining a downward pressing result of the pressing plate mechanism based on the height feature information of the pressing plate mechanism and the height feature information of the at least one busbar assembly includes: for each terminal post, determining a downward pressing result of a pressing nozzle corresponding to the terminal post, based on height feature information of a busbar assembly corresponding to the terminal post, height feature information of the pressing nozzle corresponding to the terminal post, and height feature information of a pressing plate corresponding to the terminal post; and determining the downward pressing result of the pressing plate mechanism based on the downward pressing result of the pressing nozzle corresponding to each terminal post.

In the embodiments of the present disclosure, first, the pressing nozzle is expanded and contracted along the pressing direction through the buffer member, which can better adapt to changes in the welding position of the battery along the pressing direction, thereby facilitating close attachment of the terminal post and the busbar assembly under the force of the pressing nozzle, and improving welding quality. Second, the design of each through hole not only provides passages for the detection mechanism and the welding moving mechanism to operate, but also reduces the possibility of high-temperature foreign matters splashed during the welding process adhering to a galvanometer, thereby protecting the galvanometer and extending the service life of the galvanometer. Third, the height feature information of the pressing plate, the pressing nozzle, and the busbar assembly is acquired simultaneously through the detection mechanism, which, compared to point-by-point scanning using a rangefinder, not only improves scanning efficiency, but also can more comprehensively and accurately obtain multiple types of height feature information. Finally, the downward pressing result of the pressing plate mechanism is determined based on the height feature information of the busbar assemblies, the pressing nozzles, and the pressing plates, which improves accuracy of the downward pressing result.

In some implementations, the determining the downward pressing result of the pressing plate mechanism based on the downward pressing result of the pressing nozzle corresponding to each terminal post includes: in a case that the downward pressing result of the pressing nozzle corresponding to each terminal post all indicates that downward pressing is completed, using a first downward pressing result indicating that downward pressing is completed as the downward pressing result of the pressing plate mechanism; and in a case that a downward pressing result of a pressing nozzle corresponding to at least one terminal post indicates that downward pressing is not completed, using a second downward pressing result indicating that downward pressing is not completed as the downward pressing result of the pressing plate mechanism.

In the embodiments of the present disclosure, the downward pressing result of the pressing plate mechanism is comprehensively determined based on the downward pressing results of the pressing nozzles corresponding to the terminal posts, which not only improves accuracy of the downward pressing result of the pressing plate mechanism, but also achieves the purpose of ensuring that each pressing nozzle accurately presses against the corresponding busbar assembly, so that the busbar assembly can be better attached to the corresponding terminal post.

In some implementations, the determining target welding coordinates of the terminal post based on first terminal post coordinates of the terminal post in a welding station coordinate system and height feature information of a busbar assembly corresponding to the terminal post includes: determining terminal post offset coordinates based on the first terminal post coordinates of the terminal post in the welding station coordinate system and preset first standard terminal post coordinates; determining height offset information based on the height feature information of the busbar assembly corresponding to the terminal post and a preset standard terminal post height; and determining the target welding coordinates of the terminal post based on the terminal post offset coordinates and the height offset information.

In the implementations of the present disclosure, targeted compensation is respectively performed based on deviation information of each terminal post in various directions. Compared with using the same compensation value for each terminal post in a specific direction (for example, height), this improves the precision of welding coordinates, thereby improving the welding quality and welding yield rate.

In some implementations, the controlling a detection mechanism to acquire height feature information of a pressing plate mechanism and height feature information of at least one busbar assembly includes: determining a second target verification result of the to-be-welded battery based on the first terminal post coordinates of each terminal post in the welding station coordinate system; and in a case that the second target verification result of the to-be-welded battery indicates verification success, controlling the detection mechanism to acquire the height feature information of the pressing plate mechanism and the height feature information of the at least one busbar assembly.

In the implementations of the present disclosure, on one hand, the second target verification result is determined based on the terminal post coordinates of each terminal post in the welding station coordinate system, which improves accuracy of the second target verification result; on the other hand, in a case that the second target verification result indicates verification success, the detection mechanism is controlled to acquire each piece of height feature information, so as to reduce the possibility of false welding, off-center welding, and the like caused by defects of the terminal posts themselves.

In some implementations, the determining a second target verification result of the to-be-welded battery based on the first terminal post coordinates of each terminal post in the welding station coordinate system includes: for each terminal post, determining the first terminal post coordinates of the terminal post in the welding station coordinate system based on second terminal post coordinates of the terminal post in a pre-welding addressing station coordinate system and a mapping relationship, and determining a verification result of the terminal post based on the first terminal post coordinates and preset second standard terminal post coordinates; where the mapping relationship is determined based on first mark coordinates of a mark point corresponding to the to-be-welded battery in the welding station coordinate system and second mark coordinates of the mark point in the pre-welding addressing station coordinate system; and determining the second target verification result of the to-be-welded battery based on the verification result of each terminal post.

In the implementations of the present disclosure, first, using coordinates of the mark points of the to-be-welded battery in the pre-welding addressing station coordinate system and the welding station coordinate system respectively as references, the mapping relationship of coordinates between the pre-welding addressing station coordinate system and the welding station coordinate system can be quickly and accurately determined, so that based on the mapping relationship, the coordinates of the terminal posts of the to-be-welded battery in the pre-welding addressing station coordinate system can be quickly and accurately converted into the coordinates of the terminal posts in the welding station coordinate system, without the need to take images of the terminal posts one by one to determine the coordinates of each terminal post in the welding station coordinate system, thereby improving the accuracy and efficiency of determining the terminal post coordinates in the welding station coordinate system. Second, the verification result of the terminal post is determined based on the coordinates of the terminal post in the welding station coordinate system and the standard terminal post coordinates, which improves accuracy of the verification result of the terminal post and reduces the possibility of false welding, off-center welding, and the like caused by defects of the terminal posts themselves. Finally, the second target verification result of the to-be-welded battery is determined based on the verification result of each terminal post, which improves accuracy and comprehensiveness of the second target verification result.

In some implementations, the determining the first terminal post coordinates of the terminal post in the welding station coordinate system based on second terminal post coordinates of the terminal post in a pre-welding addressing station coordinate system and a mapping relationship includes: determining the first mark coordinates of the mark point in the welding station coordinate system based on an image that is of the mark point corresponding to the to-be-welded battery and that is acquired by a visual acquisition mechanism; determining the mapping relationship based on the first mark coordinates of the mark point in the welding station coordinate system and the second mark coordinates of the mark point in the pre-welding addressing station coordinate system; and converting the second terminal post coordinates of the terminal post in the pre-welding addressing station coordinate system by using the mapping relationship to obtain the first terminal post coordinates of the terminal post in the welding station coordinate system.

In the implementations of the present disclosure, on one hand, using coordinates of the mark points of the to-be-welded battery in the pre-welding addressing station coordinate system and the welding station coordinate system respectively as references, the mapping relationship of coordinates between the pre-welding addressing station coordinate system and the welding station coordinate system can be quickly and accurately determined; on the other hand, the visual acquisition mechanism acquires only the image of the mark points and the mapping relationship to accurately determine the terminal post coordinates of each terminal post in the welding station coordinate system, without the need to capture images of the terminal posts one by one to determine the terminal post coordinates of each terminal post in the welding station coordinate system, which ensures accuracy of the terminal post coordinates while improving determination efficiency.

In some implementations, the determining the second target verification result of the to-be-welded battery based on the verification result of each terminal post includes: in a case that a verification result of at least one terminal post indicates verification failure, using a first verification result indicating verification failure as the second target verification result of the to-be-welded battery; and in a case that the verification result of each terminal post indicates verification success, determining the second target verification result of the to-be-welded battery based on the first terminal post coordinates of each terminal post in the welding station coordinate system and a calibration straight line corresponding to the pressing plate mechanism.

In the implementations of the present disclosure, when the verification results of each terminal post are all successful, the second target verification result of the to-be-welded battery is determined based on the terminal post coordinates of each terminal post in the welding station coordinate system and the calibration straight line, which improves accuracy of the second target verification result, thereby ensuring orderly execution of subsequent acquisition operations and welding operations.

In some implementations, the determining the second target verification result of the to-be-welded battery based on the first terminal post coordinates of each terminal post in the welding station coordinate system and a calibration straight line corresponding to the pressing plate mechanism includes: generating a fitted straight line based on the first terminal post coordinates of each terminal post in the welding station coordinate system; determining a deviation angle based on the fitted straight line and the calibration straight line; and determining the second target verification result of the to-be-welded battery based on the deviation angle.

In the implementations of the present disclosure, on one hand, the deviation angle is determined based on the terminal post coordinates of each terminal post in the welding station coordinate system and the calibration straight line, which improves accuracy of the deviation angle; on the other hand, the second target verification result of the to-be-welded battery is determined based on the deviation angle, which improves accuracy of the second target verification result.

In some implementations, the determining the second target verification result of the to-be-welded battery based on the deviation angle includes: in a case that the deviation angle is within a preset angle deviation range, using a second verification result indicating verification success as the second target verification result of the to-be-welded battery; and in a case that the deviation angle is not within the angle deviation range, determining the second target verification result of the to-be-welded battery based on next first terminal post coordinates of each terminal post in the welding station coordinate system.

In the implementations of the present disclosure, the second target verification result of the to-be-welded battery is determined based on the deviation angle and the angle deviation range, which improves accuracy of the second target verification result, so as to ensure that subsequent operations are performed only when the deviation angle is within the angle deviation range, thereby improving efficiency and accuracy of operations.

In some implementations, in a case that the deviation angle is within the angle deviation range, the welding method further includes: determining a correction position based on the fitted straight line and the calibration straight line; and controlling the pressing plate mechanism to move to the correction position.

In the implementations of the present disclosure, on one hand, the correction position is determined based on the fitted straight line and the calibration straight line, which improves accuracy of the correction position; on the other hand, the pressing plate mechanism is corrected based on the correction position, which reduces the possibility of missed welding, false welding, and the like caused by off-center pressing of the pressing plate mechanism.

It should be understood that the foregoing general descriptions and the following detailed descriptions are merely illustrative and explanatory, and do not constitute any limitation on the present disclosure.

### BRIEF DESCRIPTION OF DRAWINGS

The accompanying drawings herein are incorporated in the specification as a part of the specification, and the accompanying drawings show embodiments that are in accordance with the present disclosure, and used together with the specification to describe the technical solutions of the present disclosure.
FIG. 1 is a first schematic flowchart of an implementation of a welding method for terminal posts according to an embodiment of the present disclosure;
FIG. 2 is a schematic structural diagram of a welding system for terminal posts according to an embodiment of the present disclosure;
FIG. 3 is a schematic diagram of a to-be-welded battery according to an embodiment of the present disclosure;
FIG. 4 is a schematic structural diagram of a pressing nozzle assembly according to an embodiment of the present disclosure;
FIG. 5 is a first schematic structural diagram of a terminal post welding device according to an embodiment of the present disclosure;
FIG. 6 is a schematic structural diagram of a welding moving mechanism according to an embodiment of the present disclosure;
FIG. 7 is a second schematic structural diagram of a terminal post welding device according to an embodiment of the present disclosure;
FIG. 8 is a third schematic structural diagram of a terminal post welding device according to an embodiment of the present disclosure; and
FIG. 9 is a second schematic flowchart of an implementation of a welding method for terminal posts according to an embodiment of the present disclosure.

### DETAILED DESCRIPTION OF EMBODIMENTS

In order to make the objectives, technical solutions, and advantages of the present disclosure clearer, the present disclosure will be further described in detail below with reference to the accompanying drawings. The described embodiments should not be regarded as limitations on the present disclosure. All other embodiments obtained by persons of ordinary skill in the art without making creative efforts shall fall within the protection scope of the present disclosure.

In the following description, reference is made to "some embodiments", which describe a subset of all possible embodiments, but it can be understood that "some embodiments" may be the same subset or different subsets of all possible embodiments, and may be combined with each other without conflict.

In the following description, the terms "first\second\third" involved are only used to distinguish similar objects, and do not represent a specific ordering of the objects. It can be understood that "first\second\third" can interchange specific orders or sequences where permitted, so that the embodiments of the present disclosure described herein can be implemented in an order other than those illustrated or described herein.

Unless otherwise defined, meanings of all technical and scientific terms used in this specification are the same as those commonly understood by persons skilled in the art of this application. The terms used herein are only for the purpose of describing the embodiments of the present disclosure, and are not intended to limit the present disclosure.

In the related art, new energy batteries are being used more and more widely in daily life and industry. New energy batteries are not only applied to energy storage power systems such as hydraulic, thermal, wind, and solar power stations, but also widely applied to electric transportation tools such as electric bicycles, electric motorcycles, and electric vehicles, as well as multiple fields such as aerospace. With the continuous expansion of the application field of power batteries, the market demand is also expanding continuously. A battery may be a battery cell. The battery cell refers to a basic unit capable of implementing mutual conversion between chemical energy and electrical energy, and can be used to manufacture a battery module or a battery pack, so as to be used to supply power to an electrical apparatus. The battery cell may be a secondary battery. The secondary battery refers to a battery cell that can continue to be used by activating active materials through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. The battery may alternatively be a single physical module including one or more battery cells to provide higher voltage and capacity. When there are a plurality of battery cells, the plurality of battery cells are connected in series, in parallel, or in series-parallel through busbar components. An electrode plate is a main component of a battery cell, and directly determines electrochemical performance and safety of the battery.

Welding refers to using energy such as laser to melt a busbar assembly (for example, a busbar, Busbar, also referred to as a busbar sheet) placed on a battery cell together with the battery cell, so as to implement series-parallel connection between the battery cells. Because different battery products require different numbers of rows and columns of battery cells, spacings between battery cells may also be different, and spacings between battery cells in the same battery product may also be different, after a plurality of battery cells are grouped together, the terminal posts may have grouping tolerances in the X, Y, and Z directions. The larger the battery size, the greater such tolerances may be. In the process of non-contact welding using a galvanometer, fixed parameters are usually used for welding. As a result, for welding of terminal posts of battery cells having different heights, serious quality issues such as false welding and off-center welding may occur.

An embodiment of the present disclosure provides a welding method for terminal posts. First, a downward pressing result of a pressing plate mechanism is comprehensively determined based on height feature information of the pressing plate mechanism and height feature information of busbar assemblies, which improves accuracy of the downward pressing result, thereby improving welding precision. Second, welding of busbar assemblies and terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward. Finally, target welding coordinates of each terminal post are separately determined based on the height feature information of each busbar assembly and terminal post coordinates of each terminal post, which improves accuracy of the welding coordinates, thereby reducing the possibility of false welding, missed welding, and the like caused by tolerances of the terminal posts in various directions, further improving the welding quality and battery yield rate, and meeting production requirements of high timeliness and high efficiency.

The method provided in the embodiments of the present disclosure may be executed by a welding device, a control apparatus, or the like. The welding device may be any suitable type of welding device in any suitable scenario. In some implementations, the welding device may include the control apparatus. The control apparatus may include, but is not limited to, at least one of a programmable logic controller (Programmable Logic Controller, PLC), a host computer, a middle computer, a single-chip microcomputer, and the like. During implementation, the control apparatus may further include a processor and a memory storing processor-executable instructions, and when the instructions are executed by the processor, the method provided in the embodiments of the present disclosure is implemented.

The technical solutions in the embodiments of the present disclosure will be described clearly and completely below with reference to the accompanying drawings in the embodiments of the present disclosure.

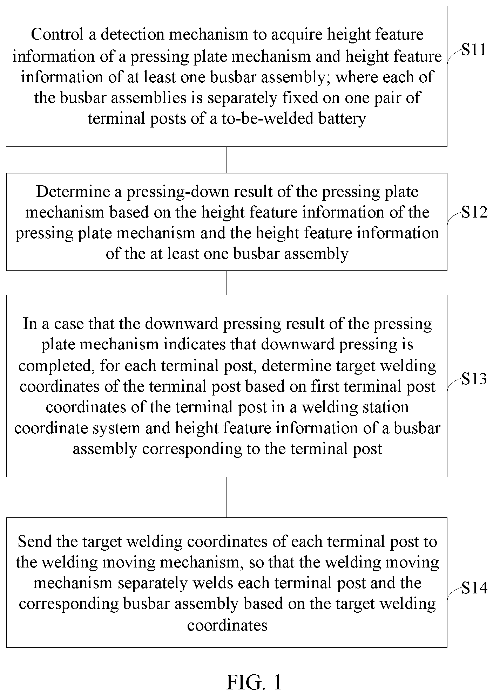

FIG. 1 is a first schematic flowchart of an implementation of a welding method for terminal posts according to an embodiment of the present disclosure. The welding method is applied to a control apparatus. As shown in FIG. 1, the welding method includes step S11 to step S14.

Step S11: Control a detection mechanism to acquire height feature information of a pressing plate mechanism and height feature information of at least one busbar assembly; where each of the busbar assemblies is separately fixed on one pair of terminal posts of a to-be-welded battery.

Here, the control apparatus may be any suitable apparatus, for example, a host computer, a PLC, a host computer + PLC, or the like. During implementation, the control apparatus may be located in the welding device, or may be independent of the welding device. The control apparatus is communicatively connected to a welding device.

The detection mechanism may be any suitable mechanism that implements this function, for example, a profilometer. The profilometer scans the pressing plate mechanism and the busbar assemblies to obtain corresponding height feature information. The height feature information indicates a distance between a corresponding assembly (including the pressing plate mechanism, the busbar assembly, or the like) and a terminal post surface. The terminal post surface is a surface on which the terminal posts of the to-be-welded battery are located. In some implementations, the control apparatus sends an acquisition instruction to a detection mechanism, so that the detection mechanism acquires height feature information based on the acquisition instruction. In this way, compared with real-time acquisition, the number of acquisitions is reduced, and hardware consumption is reduced.

The pressing plate mechanism is configured to press against the busbar assemblies, so that the busbar assemblies are closely attached to corresponding terminal posts respectively. During implementation, the pressing plate mechanism may be any suitable mechanism capable of implementing this function. For example, the pressing plate mechanism may at least include at least one pressing nozzle assembly, the number of pressing nozzle assemblies matches the number of terminal posts in the to-be-welded battery. During implementation, the number of pressing nozzle assemblies may be the same as the number of terminal posts, or may be less than the number of terminal posts, or may be greater than the number of terminal posts, so as to be compatible with welding requirements of different battery products. For example, if the number of terminal posts is 20, the number of pressing nozzle assemblies may be 4, 20, 40, or the like. The pressing nozzle assembly may include, but is not limited to, a pressing plate, a pressing nozzle, and a buffer member. The pressing nozzle presses against the busbar assembly, the buffer member is disposed between the pressing nozzle and the pressing plate, and a through hole on the pressing plate communicates with a through hole on the pressing nozzle to provide a passage for the operation of the detection mechanism and the welding operation. In some implementations, the pressing plates of the pressing nozzle assemblies are connected, that is, one mounting plate is divided into a plurality of areas, and a mounting plate of each area serves as the pressing plate of the pressing nozzle assembly. In some implementations, the pressing plates of the pressing nozzle assemblies are independent of each other.

The height feature information of the pressing plate mechanism may be any suitable information, for example, height feature information of the pressing nozzle, or height feature information of the pressing plate.

The height feature information of the pressing nozzle may include, but is not limited to, at least one of a height of a specific set point in the pressing nozzle, an average height corresponding to the through hole of the pressing nozzle, and the like. The set point may be a point in the through hole, for example, a center point of the through hole or an edge point of the through hole. The height of the specific set point in the pressing nozzle refers to a distance between the set point and the terminal post surface. The average height corresponding to the through hole of the pressing nozzle is an average value of distances between various points in the through hole of the pressing nozzle and the terminal post surface.

The height feature information of the pressing plate may include, but is not limited to, at least one of a height of a specific set point in the pressing plate, an average height corresponding to the through hole of the pressing plate, and the like. The set point may be a point in the through hole, for example, a center point of the through hole or an edge point of the through hole. The height of the specific set point in the pressing plate refers to a distance between the set point and the terminal post surface. The average height corresponding to the through hole of the pressing plate is an average value of distances between various points in the through hole of the pressing plate and the terminal post surface.

The busbar assembly is used to implement electrical connection between battery cells, that is, series connection, parallel connection, series-parallel connection, or the like. During implementation, the busbar assemblies may be first fixed on the terminal posts of the corresponding battery cells in a connection manner, and two ends of the busbar assembly are respectively fixed on two different terminal posts. The height feature information of the busbar assembly may include, but is not limited to, at least one of a height of a specific set point in the busbar assembly, an average height corresponding to a contour surface of the busbar assembly, and the like. The set point may be a point in the contour surface, for example, a center point of the contour surface, or an edge point of the contour surface. The height of the specific set point in the busbar assembly refers to a distance between the set point and the terminal post surface. The average height corresponding to the contour surface of the busbar assembly is an average value of distances between various points in the contour surface and the terminal post surface.

The to-be-welded battery (that is, battery product) includes at least two battery cells, and each battery cell includes a pair of positive and negative terminal posts.

In some implementations, after preliminary verification of the to-be-welded battery indicates verification success, the detection mechanism may be controlled to obtain various height feature information. The preliminary verification may include, but is not limited to, at least one of terminal post position verification, deviation angle verification, and the like. The terminal post position verification refers to whether a deviation value between actual terminal post coordinates of the terminal post in the welding station coordinate system and standard terminal post coordinates are within a deviation threshold range. The deviation angle verification refers to whether a deviation angle between a fitted straight line and a calibration straight line is within a preset deviation angle range. The fitted straight line is generated based on actual terminal post coordinates of a plurality of target terminal posts in the welding station coordinate system, and the target terminal posts are determined from a plurality of terminal posts. The calibration straight line is obtained by calibrating at least two mark points of the entire area of the pressing plate mechanism in a calibration manner.

In some implementations, in a case that the preliminary verification includes the terminal post position verification and the deviation angle verification, the terminal post position verification may be performed first, and in a case that the terminal post position verification indicates that verification is passed, the deviation angle verification is then performed. Alternatively, the deviation angle verification may be performed first, and in a case that the deviation angle verification is passed, the terminal post position verification is then performed.

Step S12: Determine a downward pressing result of the pressing plate mechanism based on the height feature information of the pressing plate mechanism and the height feature information of the at least one busbar assembly.

Here, the downward pressing result of the pressing plate mechanism may include, but is not limited to, a first downward pressing result, a second downward pressing result, and the like. The first downward pressing result indicates that downward pressing is completed, and the second downward pressing result indicates that downward pressing is not completed.

In some implementations, the height feature information of the pressing plate mechanism may be compared with a preset first calibration height to obtain a first comparison result, and the height feature information of each busbar assembly is separately compared with a preset second calibration height to obtain a second comparison result corresponding to each busbar assembly; and the downward pressing result of the pressing plate mechanism is determined based on the first comparison result and the second comparison result corresponding to each busbar assembly. For example, in a case that the first comparison result indicates that downward pressing is completed and the second comparison result corresponding to each busbar assembly indicates that downward pressing is completed, the first downward pressing result is used as the downward pressing result of the pressing plate mechanism; conversely, in a case that the first comparison result indicates that downward pressing is not completed and/or the second comparison result corresponding to at least one busbar assembly indicates that downward pressing is not completed, the second downward pressing result is used as the downward pressing result of the pressing plate mechanism.

In some implementations, a difference between the height feature information of the pressing plate mechanism and the height feature information of the corresponding busbar assembly may be determined, and the downward pressing result of the pressing plate mechanism is determined based on the difference. For example, in a case that the difference indicates that downward pressing is completed, the first downward pressing result is used as the downward pressing result of the pressing plate mechanism; conversely, in a case that the difference indicates that downward pressing is not completed, the second downward pressing result is used as the downward pressing result of the pressing plate mechanism.

In some implementations, the pressing plate mechanism includes at least one pressing nozzle assembly, the number of pressing nozzle assemblies matches the number of terminal posts, the pressing nozzle assembly includes a pressing plate, a pressing nozzle, and a buffer member, and the height feature information of the pressing plate mechanism includes height feature information of each pressing plate and height feature information of each pressing nozzle. The step S12 includes step S121 to step S122.

Step S121. For each terminal post, determine a downward pressing result of a pressing nozzle corresponding to the terminal post, based on height feature information of a busbar assembly corresponding to the terminal post, height feature information of the pressing nozzle corresponding to the terminal post, and height feature information of a pressing plate corresponding to the terminal post.

Here, when the pressing plate mechanism is pressed downward under force, from top to bottom, one end of the pressing nozzle assembly presses against the corresponding busbar assembly, and one end of the busbar assembly presses against the corresponding terminal post.

The downward pressing result of the pressing nozzle may include, but is not limited to, a third downward pressing result, a fourth downward pressing result, and the like. The third downward pressing result indicates that the pressing nozzle has completed downward pressing, and the fourth downward pressing result indicates that the pressing nozzle has not completed downward pressing. In some implementations, a determining manner for the downward pressing result of the pressing nozzle may include, but is not limited to, a first difference, a second difference, and/or a third difference, and the like. The first difference is a difference between the height feature information of the busbar assembly and the height feature information of the pressing nozzle. The second difference is a difference between the height feature information of the pressing nozzle and the height feature information of the pressing plate. The third difference is a difference between the height feature information of the pressing plate and the height feature information of the busbar assembly. During implementation, those skilled in the art may select the determining manner for the downward pressing result of the pressing nozzle according to actual requirements, which is not limited in the embodiments of the present disclosure.

For example, a displacement amount of the buffer member is determined based on a difference between the third difference and a third calibration difference, and the downward pressing force is determined based on the displacement amount of the buffer member. In a case that the downward pressing force is not less than a preset force threshold, the third downward pressing result is used as the downward pressing result of the pressing nozzle; conversely, the fourth downward pressing result is used as the downward pressing result of the pressing nozzle. The third calibration difference is a difference between the height feature information of the pressing plate and the height feature information of the busbar assembly when the pressing plate mechanism is not pressed downward. For another example, a displacement amount of the buffer member is determined based on a difference between the second difference and a second calibration difference. In a case that the displacement amount is not less than a preset displacement amount threshold, the third downward pressing result is used as the downward pressing result of the pressing nozzle; conversely, the fourth downward pressing result is used as the downward pressing result of the pressing nozzle. The second calibration difference is a difference between the height feature information of the pressing plate and the height feature information of the pressing nozzle when the pressing plate mechanism is not pressed downward. For still another example, a difference between the first difference and a first calibration difference is determined. In a case that the difference is not greater than a preset difference threshold, the third downward pressing result is used as the downward pressing result of the pressing nozzle; conversely, the fourth downward pressing result is used as the downward pressing result of the pressing nozzle. The first calibration difference is a difference between the height feature information of the busbar assembly and the height feature information of the pressing nozzle when the pressing plate mechanism is not pressed downward. For yet another example, a difference between the first difference and the first calibration difference is determined, and a displacement amount of the buffer member is determined based on a difference between the second difference and the second calibration difference. If the difference is not greater than a preset difference threshold and the displacement amount is not less than a preset displacement amount threshold, the third downward pressing result is used as the downward pressing result of the pressing nozzle; conversely, the fourth downward pressing result is used as the downward pressing result of the pressing nozzle.

Step S122: Determine the downward pressing result of the pressing plate mechanism based on the downward pressing result of the pressing nozzle corresponding to each terminal post.

Here, the downward pressing result of the pressing plate mechanism includes a first downward pressing result, a second downward pressing result, and the like.

In some implementations, the step S122 includes step S1221 and/or step S1222.

Step S1221: In a case that the downward pressing result of the pressing nozzle corresponding to each terminal post indicates that downward pressing is completed, use a first downward pressing result indicating that downward pressing is completed as the downward pressing result of the pressing plate mechanism.

Here, if the downward pressing result of the pressing nozzle corresponding to each terminal post is all the third downward pressing result, the first downward pressing result may be used as the downward pressing result of the pressing plate mechanism.

Step S1222: In a case that a downward pressing result of a pressing nozzle corresponding to at least one terminal post indicates that downward pressing is not completed, use a second downward pressing result indicating that downward pressing is not completed as the downward pressing result of the pressing plate mechanism.

Here, if the downward pressing result of the pressing nozzle corresponding to at least one terminal post is the fourth downward pressing result, the second downward pressing result may be used as the downward pressing result of the pressing plate mechanism.

In this way, the downward pressing result of the pressing plate mechanism is comprehensively determined based on the downward pressing results of the pressing nozzles corresponding to the terminal posts, which not only improves accuracy of the downward pressing result of the pressing plate mechanism, but also achieves the purpose of ensuring that each pressing nozzle accurately presses against the corresponding busbar assembly, so that the busbar assembly can be better attached to the corresponding terminal post.

In the embodiments of the present disclosure, first, the pressing nozzle is expanded and contracted along the pressing direction through the buffer member, which can better adapt to changes in the welding position of the battery along the pressing direction, thereby facilitating close attachment of the terminal post and the busbar assembly under the force of the pressing nozzle, and improving welding quality. Second, the design of each through hole not only provides passages for the detection mechanism and the welding moving mechanism to operate, but also reduces the possibility of high-temperature foreign matters splashed during the welding process adhering to a galvanometer, thereby protecting the galvanometer and extending the service life of the galvanometer. Third, the height feature information of the pressing plate, the pressing nozzle, and the busbar assembly is acquired simultaneously through the detection mechanism, which, compared to point-by-point scanning using a rangefinder, not only improves scanning efficiency, but also can more comprehensively and accurately obtain multiple types of height feature information. Finally, the downward pressing result of the pressing plate mechanism is determined based on the height feature information of the busbar assemblies, the pressing nozzles, and the pressing plates, which improves accuracy of the downward pressing result.

Step S13: In a case that the downward pressing result of the pressing plate mechanism indicates that downward pressing is completed, for each terminal post, determine target welding coordinates of the terminal post based on first terminal post coordinates of the terminal post in a welding station coordinate system and height feature information of a busbar assembly corresponding to the terminal post.

Here, the height feature information of the busbar assembly may include, but is not limited to, a height of a specific set point in the busbar assembly, an average height corresponding to a contour surface of the busbar assembly, and the like. For example, the average height corresponding to the contour surface of the busbar assembly is used as the height feature information of the busbar assembly.

In some implementations, the "determining target welding coordinates of the terminal post based on first terminal post coordinates of the terminal post in a welding station coordinate system and height feature information of a busbar assembly corresponding to the terminal post" in the step S13 includes step S131 to step S133.

Step S131: Determine terminal post offset coordinates based on the first terminal post coordinates of the terminal post in the welding station coordinate system and preset first standard terminal post coordinates.

Here, the first standard terminal post coordinates are terminal post coordinates corresponding to modeling of the battery cell. The first terminal post coordinates may be plane coordinates, that is, X coordinate and Y coordinate. During implementation, the terminal post offset coordinates include a first offset amount in the X direction and a second offset amount in the Y direction. The first offset amount refers to a difference between the X coordinate of the first terminal post coordinates and the X coordinate of the first standard terminal post coordinates, and the second offset amount refers to a difference between the Y coordinate of the first terminal post coordinates and the Y coordinate of the first standard terminal post coordinates.

Step S132: Determine height offset information based on the height feature information of the busbar assembly corresponding to the terminal post and a preset standard terminal post height.

Here, the standard terminal post height is a terminal post height corresponding to modeling of the battery cell. During implementation, the height feature information of the busbar assembly may be used as a welding height of the terminal post. The height offset information refers to a difference between the welding height of the terminal post and the standard terminal post height.

Step S133: Determine the target welding coordinates of the terminal post based on the terminal post offset coordinates and the height offset information.

Here, the target welding coordinates are three-dimensional coordinates, that is, X coordinate, Y coordinate, and Z coordinate. The target welding coordinates may be offset coordinates formed by the terminal post offset coordinates and the height offset information, or may be welding coordinates obtained by compensating standard welding coordinates based on the offset coordinates. The standard welding coordinates are preset coordinates, which are three-dimensional coordinates, that is, X coordinate, Y coordinate, and Z coordinate. During implementation, the target welding coordinates may be obtained by compensating the standard welding coordinates separately in three directions based on the terminal post offset coordinates and the height offset information.

In some implementations, the control apparatus sends, to the welding moving mechanism, the target welding coordinates obtained by compensating the standard welding coordinates based on the offset coordinates, so that the welding moving mechanism takes the target welding coordinates as final welding coordinates, and performs welding operations based on the final welding coordinates.

In some implementations, the standard welding coordinates may be located in the welding moving mechanism. During implementation, the control apparatus may send the target welding coordinates formed by the terminal post offset coordinates and the height offset information to the welding moving mechanism, so that the welding moving mechanism compensates the standard welding coordinates based on the terminal post offset coordinates and the height offset information to obtain final welding coordinates of the terminal post, and performs welding based on the final welding coordinates of the terminal post. In this way, targeted compensation is respectively performed based on deviation information of each terminal post in various directions. Compared with using the same compensation value for each terminal post in a specific direction (for example, height), this improves the precision of welding coordinates, thereby improving the welding quality and welding yield rate.

Step S14: Send the target welding coordinates of each terminal post to the welding moving mechanism, so that the welding moving mechanism separately welds each terminal post and the corresponding busbar assembly based on the target welding coordinates.

Here, the welding moving mechanism is a movable welding mechanism. The welding mechanism may be any suitable mechanism capable of implementing a welding function, for example, a laser welding mechanism, which emits laser light to irradiate a position to be welded, so as to melt materials in the position to be welded, achieving the purpose of welding. In some implementations, the welding mechanism includes a laser generator and a galvanometer, the laser generator is configured to generate laser light, the galvanometer is configured to reflect the laser light emitted by the laser generator, and a reflective surface of the galvanometer forms an angle with the laser light emitted by the laser generator. By controlling oscillation of the galvanometer, an emission angle of the laser light reflected by the galvanometer can be changed, so as to expand a range of welding operations through the galvanometer while the position of the laser generator remains fixed.

The moving manner of the welding mechanism may be any suitable manner. For example, the welding mechanism is drivingly connected to a moving mechanism (for example, an execution end of a robot) to drive the welding mechanism to move to a target welding position of each terminal post separately for operation. The target welding position is determined based on the final welding coordinates of the terminal post.

In some implementations, the number of welding mechanisms may be at least one. In a case that the welding mechanism does not need to perform welding, the welding mechanism can be driven to move to a default position, so as to reduce the possibility of collision between different welding mechanisms.

In the embodiments of the present disclosure, first, the downward pressing result of the pressing plate mechanism is comprehensively determined based on the height feature information of the pressing plate mechanism and the height feature information of the busbar assemblies, which improves accuracy of the downward pressing result, thereby improving welding precision. Second, welding of the busbar assemblies and the terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward. Finally, the target welding coordinates of each terminal post are separately determined based on the height feature information of each busbar assembly and the terminal post coordinates of each terminal post, which improves accuracy of the welding coordinates, thereby reducing the possibility of false welding, missed welding, and the like caused by tolerances of the terminal posts in various directions, further improving welding quality and battery yield rate, and meeting production requirements of high timeliness and high efficiency.

In some implementations, the step S11 includes step S111 to step S112.

Step S111: Determine a second target verification result of the to-be-welded battery based on the first terminal post coordinates of each terminal post in the welding station coordinate system.

Here, the second target verification result includes a first verification result, a second verification result, and the like. The first verification result indicates verification failure, and the second verification result indicates verification success.

In some implementations, the step S111 includes step S141 and step S142.

Step S141: For each terminal post, determine the first terminal post coordinates of the terminal post in the welding station coordinate system based on second terminal post coordinates of the terminal post in a pre-welding addressing station coordinate system and a mapping relationship, and determine a verification result of the terminal post based on the first terminal post coordinates and preset second standard terminal post coordinates.

Here, the mapping relationship is determined based on first mark coordinates of a mark point corresponding to the to-be-welded battery in the welding station coordinate system and second mark coordinates of the mark point in the pre-welding addressing station coordinate system.

The obtaining manner of the second terminal post coordinates may be any suitable manner. For example, the control apparatus communicates with a control apparatus on the pre-welding addressing station to obtain the second terminal post coordinates. Before welding of the to-be-welded battery, at least one terminal post and a mark point of the battery product to be welded may be addressed at the pre-welding addressing station to obtain second terminal post coordinates of each terminal post in the pre-welding addressing station coordinate system and second mark coordinates of the mark point in the pre-welding addressing station coordinate system. The pre-welding addressing station may be a station before the welding station, and the pre-welding addressing station coordinate system may be a unified coordinate system constructed for physical positions in the addressing station. Through the pre-welding addressing station coordinate system, visual positions of at least one terminal post and mark points of the battery product to be welded in the pre-welding addressing station may be unified into the same coordinate system. The obtaining manner of the second terminal post coordinates and the second mark coordinates may be any suitable manner. For example, an area array camera is used to capture images of the terminal posts and mark points, so as to obtain coordinates of the terminal posts and the mark points in an addressing image, and based on a conversion relationship between an image coordinate system and an addressing coordinate system, positions of the terminal posts and mark points in the addressing image are converted into coordinates in the addressing coordinate system.

For another example, the control apparatus communicates with a manufacturing execution system (Manufacturing Execution System, MES) to obtain the second terminal post coordinates.

In some implementations, the "determining the first terminal post coordinates of the terminal post in the welding station coordinate system based on second terminal post coordinates of the terminal post in a pre-welding addressing station coordinate system and a mapping relationship" in the step S141 includes step S1411 to step S1413.

Step S1411: Determine the first mark coordinates of the mark point in the welding station coordinate system based on an image that is of the mark point corresponding to the to-be-welded battery and that is acquired by a visual acquisition mechanism.

Here, the visual acquisition mechanism may be any suitable mechanism that implements this function, for example, a camera. In some implementations, the control apparatus sends an acquisition instruction to the visual acquisition mechanism, so that the visual acquisition mechanism acquires an image of the mark point based on the acquisition instruction. In this way, compared with real-time acquisition, the number of acquisitions is reduced, and hardware consumption is reduced.

The mark point may be a fixed feature point on the battery product other than the terminal posts, or may be a fixed feature point on a carrier carrying the battery product. The number of mark points may be at least one, for example, 2 or 4. In some implementations, for different products (for example, battery modules or battery packs), positions and the number of mark points may be the same or different. During implementation, if the number of mark points is at least two, the first mark coordinates include mark coordinates of each mark point. In some implementations, the number and positions of the mark points may be obtained from the association information of the to-be-welded battery, and the association information of the to-be-welded battery may be obtained from a blueprint corresponding to the to-be-welded battery.

In some implementations, the image may be recognized through any suitable neural network and/or model to obtain the first mark coordinates of the mark point in the welding station coordinate system.

Step S1412: Determine the mapping relationship based on the first mark coordinates of the mark point in the welding station coordinate system and the second mark coordinates of the mark point in the pre-welding addressing station coordinate system.

Here, the obtaining manner of the second mark coordinates may be any suitable manner. For example, the control apparatus communicates with a control apparatus on the pre-welding addressing station to obtain the second mark coordinates. For another example, the control apparatus communicates with the MES to obtain the second mark coordinates. During implementation, coordinates in the pre-welding addressing station coordinate system and coordinates in the welding station coordinate system can be converted into each other to implement position alignment in the two coordinate systems.

The mapping relationship may include, but is not limited to, at least one of a rotation parameter, a translation parameter, a scaling parameter, and the like. During implementation, the mapping relationship is obtained through calculation based on the first mark coordinates and the second mark coordinates.

Step S1413: Convert the second terminal post coordinates of the terminal post in the pre-welding addressing station coordinate system by using the mapping relationship to obtain the first terminal post coordinates of the terminal post in the welding station coordinate system.

Here, the first terminal post coordinates may be obtained by converting the second terminal post coordinates based on the mapping relationship. For example, in a case that the mapping relationship includes a rotation parameter, the second terminal post coordinates are rotated based on the rotation parameter (that is, being rotated around a preset rotation point) to obtain the first terminal post coordinates. For another example, in a case that the mapping relationship includes a translation parameter, the second terminal post coordinates are translated based on the translation parameter to obtain the first terminal post coordinates. For another example, in a case that the mapping relationship includes a rotation parameter and a scaling parameter, the second terminal post coordinates may be first rotated based on the rotation parameter to obtain rotated second terminal post coordinates, and then the rotated second terminal post coordinates are scaled based on the scaling parameter to obtain the first terminal post coordinates. Alternatively, the second terminal post coordinates may be first scaled based on the scaling parameter to obtain scaled second terminal post coordinates, and then the scaled second terminal post coordinates are rotated based on the rotation parameter to obtain the first terminal post coordinates.

In the implementations of the present disclosure, on one hand, using coordinates of the mark points of the to-be-welded battery in the pre-welding addressing station coordinate system and the welding station coordinate system respectively as references, the mapping relationship of coordinates between the pre-welding addressing station coordinate system and the welding station coordinate system can be quickly and accurately determined; on the other hand, the visual acquisition mechanism acquires only the image of the mark points and the mapping relationship to accurately determine the terminal post coordinates of each terminal post in the welding station coordinate system, without the need to capture images of the terminal posts one by one to determine the terminal post coordinates of each terminal post in the welding station coordinate system, which ensures accuracy of the terminal post coordinates while improving determination efficiency.

The verification result of the terminal post indicates whether verification of the terminal post is successful. The second standard terminal post coordinates are any suitable terminal post coordinates. For example, the second standard terminal post coordinates may be preset terminal post coordinates. In some implementations, a difference between the first terminal post coordinates and the second standard terminal post coordinates may be determined. If the difference is within a set difference range, it indicates that verification of the terminal post is successful, and conversely, it indicates that verification of the terminal post fails. The difference includes a difference in the X direction and a difference in the Y direction, and the difference range includes a difference range in the X direction and a difference range in the Y direction. During implementation, if the difference in the X direction is within the difference range in the X direction and the difference in the Y direction is within the difference range in the Y direction, it indicates that verification of the terminal post is successful, and conversely, it indicates that verification of the terminal post fails.

Step S142: Determine the second target verification result of the to-be-welded battery based on the verification result of each terminal post.

Here, the second target verification result includes a first verification result, a second verification result, and the like. During implementation, if a verification result of at least one terminal post indicates verification failure, the first verification result may be used as the second target verification result of the to-be-welded battery; conversely, if the verification result of each terminal post indicates that verification is passed, the second verification result may be used as the second target verification result of the to-be-welded battery, or deviation angle verification may be further performed on the to-be-welded battery, and the second target verification result of the to-be-welded battery is determined based on the deviation angle verification.

In some implementations, the step S142 includes step S1421 and/or step S1422.

Step S1421: In a case that a verification result of at least one terminal post indicates verification failure, use a first verification result indicating verification failure as the second target verification result of the to-be-welded battery.

Here, if the verification result of at least one terminal post indicates verification failure, the first verification result may be used as the second target verification result of the to-be-welded battery.

Step S1422: In a case that the verification result of each terminal post indicates verification success, determine the second target verification result of the to-be-welded battery based on the first terminal post coordinates of each terminal post in the welding station coordinate system and a calibration straight line corresponding to the pressing plate mechanism.

Here, if the verification result of each terminal post indicates that verification is passed, deviation angle verification may be further performed on the to-be-welded battery, and the second target verification result of the to-be-welded battery is determined based on the deviation angle verification. During implementation, if the deviation angle is within a preset angle deviation range, the second verification result is used as the second target verification result of the to-be-welded battery; conversely, the first verification result may be used as the second target verification result of the to-be-welded battery, or the second target verification result of the to-be-welded battery is determined based on next first terminal post coordinates of each terminal post.

In this way, when the verification results of each terminal post are all successful, the second target verification result of the to-be-welded battery is determined based on the terminal post coordinates of each terminal post in the welding station coordinate system and the calibration straight line, which improves accuracy of the second target verification result, thereby ensuring orderly execution of subsequent acquisition operations and welding operations.

In the embodiments of the present disclosure, for each terminal post, the first terminal post coordinates of the terminal post in the welding station coordinate system are determined based on the second terminal post coordinates of the terminal post in the pre-welding addressing station coordinate system and the mapping relationship, the verification result of the terminal post is determined based on the first terminal post coordinates and the preset second standard terminal post coordinates, and the second target verification result of the to-be-welded battery is determined based on the verification result of each terminal post. In this way, first, using coordinates of the mark points of the to-be-welded battery in the pre-welding addressing station coordinate system and the welding station coordinate system respectively as references, the mapping relationship of coordinates between the pre-welding addressing station coordinate system and the welding station coordinate system can be quickly and accurately determined, so that based on the mapping relationship, the coordinates of the terminal posts of the to-be-welded battery in the pre-welding addressing station coordinate system can be quickly and accurately converted into the coordinates of the terminal posts in the welding station coordinate system, without the need to take images of the terminal posts one by one to determine the coordinates of each terminal post in the welding station coordinate system, thereby improving the accuracy and efficiency of determining the terminal post coordinates in the welding station coordinate system. Second, the verification result of the terminal post is determined based on the coordinates of the terminal post in the welding station coordinate system and the standard terminal post coordinates, which improves accuracy of the verification result of the terminal post and reduces the possibility of false welding, off-center welding, and the like caused by defects of the terminal posts themselves. Finally, the second target verification result of the to-be-welded battery is determined based on the verification result of each terminal post, which improves accuracy and comprehensiveness of the second target verification result.

Step S112: In a case that the second target verification result of the to-be-welded battery indicates verification success, control the detection mechanism to acquire the height feature information of the pressing plate mechanism and the height feature information of the at least one busbar assembly.

Here, the detection mechanism is controlled to acquire various height feature information only in a case that the verification is successful. For the specific acquisition process, reference may be made to the specific implementation of step S11 described above.

In the embodiments of the present disclosure, the second target verification result of the to-be-welded battery is determined based on the first terminal post coordinates of each terminal post in the welding station coordinate system; and in a case that the second target verification result of the to-be-welded battery indicates verification success, the detection mechanism is controlled to acquire the height feature information of the pressing plate mechanism and the height feature information of the at least one busbar assembly. On one hand, the second target verification result is determined based on the terminal post coordinates of each terminal post in the welding station coordinate system, which improves accuracy of the second target verification result; on the other hand, in a case that the second target verification result indicates verification success, the detection mechanism is controlled to acquire each piece of height feature information, so as to reduce the possibility of false welding, off-center welding, and the like caused by defects of the terminal posts themselves.

In some implementations, the "determining the second target verification result of the to-be-welded battery based on the first terminal post coordinates of each terminal post in the welding station coordinate system and a calibration straight line corresponding to the pressing plate mechanism" in the step S1422 includes step S151 to step S153.

Step S151: Generate a fitted straight line based on the first terminal post coordinates of each terminal post in the welding station coordinate system.

Here, the target first terminal post coordinates may be fitted in a pressing plate area of the pressing plate mechanism through any suitable fitting algorithm to obtain the fitted straight line. The target first terminal post coordinates are determined from a plurality of first terminal post coordinates. During implementation, the manner of determining the target first terminal post coordinates may be any suitable manner, for example, a customized manner or a random manner. In some implementations, each of the first terminal post coordinates is separately used as one target first terminal post coordinate.

Step S152: Determine a deviation angle based on the fitted straight line and the calibration straight line.

Here, the manner of determining the deviation angle may include, but is not limited to, an included angle, weighting of the included angle, and the like. The included angle is an included angle between the fitted straight line and the calibration straight line. For example, the included angle is used as the deviation angle.

Step S153: Determine the second target verification result of the to-be-welded battery based on the deviation angle.

Here, if the deviation angle is within a preset angle deviation range, the second verification result is used as the second target verification result of the to-be-welded battery; conversely, the first verification result may be used as the second target verification result of the to-be-welded battery, or the second target verification result of the to-be-welded battery is determined based on next first terminal post coordinates of each terminal post.

In some implementations, the step S153 includes step S1531 and/or step S1532.

Step S1531: In a case that the deviation angle is within a preset angle deviation range, use a second verification result indicating verification success as the second target verification result of the to-be-welded battery.

Here, the angle deviation range is a preset angle deviation range. During implementation, if the deviation angle is within the angle deviation range, the second verification result is used as the second target verification result of the to-be-welded battery.

Step S1532: In a case that the deviation angle is not within the angle deviation range, determine the second target verification result of the to-be-welded battery based on next first terminal post coordinates of each terminal post in the welding station coordinate system.

Here, the next first terminal post coordinates are new first terminal post coordinates, and the manner of determining the next first terminal post coordinates is similar to the manner of determining the first terminal post coordinates. During implementation, reference may be made to the specific implementation of step S141 described above. If the deviation angle is not within the angle deviation range, the second target verification result may be determined based on the next first terminal post coordinates. During implementation, reference may be made to the specific implementation of step S111 described above.

In this way, the second target verification result of the to-be-welded battery is determined based on the deviation angle and the angle deviation range, which improves accuracy of the second target verification result, so as to ensure that subsequent operations are performed only when the deviation angle is within the angle deviation range, thereby improving efficiency and accuracy of operations.

In the embodiments of the present disclosure, on one hand, the deviation angle is determined based on the terminal post coordinates of each terminal post in the welding station coordinate system and the calibration straight line, which improves accuracy of the deviation angle; on the other hand, the second target verification result of the to-be-welded battery is determined based on the deviation angle, which improves accuracy of the second target verification result.

In some implementations, in a case that the deviation angle is within the angle deviation range, the method further includes step S1533 and step S1534.

Step S1533: Determine a correction position based on the fitted straight line and the calibration straight line.

Here, the correction position may be correction in a specific direction, for example, the Y direction. The correction position may be a centerline of the deviation angle, that is, half of the deviation angle.

Step S1534: Control the pressing plate mechanism to move to the correction position.

Here, the control apparatus sends a movement instruction carrying the correction position to the pressing plate mechanism, so that the pressing plate mechanism moves from a default position to the correction position based on the movement instruction.

In the embodiments of the present disclosure, on one hand, the correction position is determined based on the fitted straight line and the calibration straight line, which improves accuracy of the correction position; on the other hand, the pressing plate mechanism is corrected based on the correction position, which reduces the possibility of missed welding, false welding, and the like caused by off-center pressing of the pressing plate mechanism.

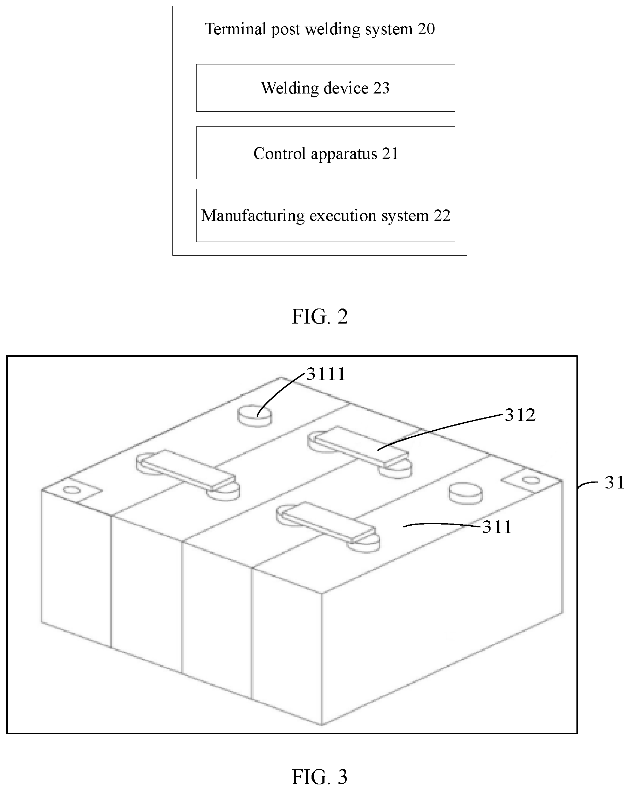

Based on the above embodiments, an embodiment of the present disclosure further provides a welding system for terminal posts. FIG. 2 is a schematic structural diagram of a welding system for terminal posts according to an embodiment of the present disclosure. As shown in FIG. 2, the welding system 20 includes a control apparatus 21, a manufacturing execution system 22, and a welding device 23.

The control apparatus 21 is configured to send identification information corresponding to a to-be-welded battery to the manufacturing execution system; where the to-be-welded battery includes a plurality of terminal posts.

The manufacturing execution system 22 is configured to determine a first target verification result of the to-be-welded battery based on the identification information corresponding to the to-be-welded battery, and send verification information to the control apparatus; where the verification information includes one of the following: a first target verification result indicating verification failure, a first target verification result indicating verification success, and association information of the to-be-welded battery, and the association information of the to-be-welded battery is determined based on a blueprint corresponding to the to-be-welded battery.

The control apparatus 21 is further configured to: in a case that the first target verification result indicates verification success and a downward pressing result of a pressing plate mechanism in the welding device indicates that downward pressing is completed, send target welding coordinates of each of the terminal posts to the welding device; where the downward pressing result of the pressing plate mechanism is determined based on height feature information of the pressing plate mechanism and height feature information of busbar assemblies corresponding to the plurality of terminal posts, the target welding coordinates of the terminal post are determined based on first terminal post coordinates of the terminal post in a welding station coordinate system and the height feature information of the busbar assembly corresponding to the terminal post, and the first terminal post coordinates of the terminal post in the welding station coordinate system are determined based on the association information of the to-be-welded battery.

The welding device 23 is configured to weld each of the terminal posts and a corresponding busbar assembly respectively based on the target welding coordinates of each terminal post.

Here, the identification information corresponding to the to-be-welded battery may include, but is not limited to, identification information of the to-be-welded battery, identification information of a conveying mechanism conveying the to-be-welded battery, and the like. The obtaining manner of the identification information may be any suitable manner. For example, an image of the to-be-welded battery is captured, and the identification information is determined based on the image. During implementation, the control apparatus 21 sends an acquisition instruction to a preset acquisition apparatus (for example, a camera), so that the acquisition apparatus acquires the image of the to-be-welded battery according to the acquisition instruction. The control apparatus may be any suitable apparatus capable of implementing this function, for example, a PLC, a host computer, or a host computer + PLC.

FIG. 3 is a schematic diagram of a to-be-welded battery according to an embodiment of the present disclosure. As shown in FIG. 3, the to-be-welded battery 31 includes a plurality of battery cells 311, each battery cell includes two terminal posts 3111, and corresponding busbar assemblies 312 are respectively fixed on the plurality of terminal posts 3111.

Height feature information of a pressing plate mechanism may include, but is not limited to, height feature information of a pressing nozzle, height feature information of a pressing plate, and the like. Height feature information of the busbar assembly may include, but is not limited to, at least one of a height of a specific set point in the busbar assembly, an average height corresponding to a contour surface of the busbar assembly, and the like. The set point may be a point in the contour surface, for example, a center point of the contour surface, or an edge point of the contour surface. During implementation, for the acquisition process of the height feature information of the busbar assembly corresponding to the terminal post and the height feature information of the pressing plate mechanism, reference may be made to the specific implementation of step S11 described above.

A downward pressing result of the pressing plate mechanism may include, but is not limited to, a first downward pressing result, a second downward pressing result, and the like. For the process of determining the downward pressing result of the pressing plate mechanism, reference may be made to the specific implementation of step S12 described above.

For the process of determining target welding coordinates of the terminal post, reference may be made to the specific implementation of step S13 described above.

The manufacturing execution system 22 is configured to obtain output information of a plurality of devices, where the output information includes output times of a plurality of products produced by the devices and identifiers indicating whether the plurality of products are qualified. The manufacturing execution system includes monitoring of a production process, and monitoring of the production process by the MES system focuses on monitoring of material conveying and quality indicators between production flows and processes. Based on real-time data of the production process, the MES system uses the configuration technology to implement real-time monitoring of production progress, process quality, and material consumption in production areas such as production workshops, power and energy workshops, auxiliary material warehouses, and finished product warehouses. When an abnormality is detected by the monitoring system during the production process, an alarm may be issued based on preset settings. This helps the production command and dispatching department of the enterprise to coordinate production, properly dispatch resources, and improve the rapid response capability of production.

The control apparatus communicates with the MES to send identification information of the to-be-welded battery to the MES.

A first target verification result indicates whether verification of the to-be-welded battery is successful, mainly verifying the type, station, or the like of the to-be-welded battery. During implementation, if the type of the to-be-welded battery does not match the type of the currently produced battery, and/or a current station of the to-be-welded battery does not match a target station (for example, there is station skipping), it indicates that verification of the to-be-welded battery fails, that is, the to-be-welded battery is considered as an abnormal welding battery and moved out of the current welding station; or if the type of the to-be-welded battery matches the type of the currently produced battery, and the current station of the to-be-welded battery matches the target station, it indicates that verification of the to-be-welded battery is successful, and welding operations can be performed.

Association information of the to-be-welded battery may be any suitable information. During implementation, in the welding operation process, any information related to the to-be-welded battery may be used as the association information, for example, dimensions of the to-be-welded battery, the number and/or dimensions of terminal posts in the to-be-welded battery, or the number and/or dimensions of mark points corresponding to the to-be-welded battery. In some implementations, blueprints corresponding to a plurality of types of battery products are pre-stored in the MES, and during implementation, the association information may be obtained from the blueprint corresponding to the to-be-welded battery.

The welding device 23 includes at least the pressing plate mechanism. The pressing plate mechanism may be any suitable mechanism capable of implementing this function. In some implementations, the pressing plate mechanism may perform downward pressing based on a downward pressing instruction sent by the control apparatus. During implementation, when the busbar assemblies are fixed on the corresponding terminal posts, the control apparatus issues a downward pressing instruction to the pressing plate mechanism, so that the pressing plate mechanism presses against the busbar assemblies.

In some implementations, the pressing plate mechanism includes at least one pressing nozzle assembly, the number of pressing nozzle assemblies matches the number of terminal posts, the pressing nozzle assembly includes a pressing plate, a pressing nozzle, and a buffer member, the pressing nozzle is configured to press against a corresponding busbar assembly, the height feature information of the pressing plate mechanism includes height feature information of each pressing plate and height feature information of each pressing nozzle. The pressing plate is provided with a first through hole, and the first through hole is configured to allow the detection mechanism to enter the first through hole to acquire the height feature information of the pressing plate and the height feature information of the pressing nozzle. The pressing nozzle is provided with a second through hole communicating with a corresponding first through hole, and the second through hole is configured to allow the detection mechanism to enter the first through hole to acquire the height feature information of the corresponding busbar assembly. The buffer member is disposed between the pressing nozzle and the pressing plate, and is capable of expanding and contracting along a pressing direction of the pressing nozzle.

Here, the number of pressing nozzle assemblies may be the same as the number of terminal posts, or may be less than the number of terminal posts, or may be greater than the number of terminal posts, so as to be compatible with welding requirements of different battery products. During implementation, a spacing between the pressing nozzle assemblies can be adjusted in real time based on a distance between the terminal posts, so as to adapt to requirements of different terminal posts, implementing a flexible design.

The buffer member may be any suitable component capable of implementing this function, for example, a spring. The expansion and contraction range of the buffer member may be any suitable size.

In some implementations, the pressing plates of the pressing nozzle assemblies are independent of each other or may be interconnected with each other.

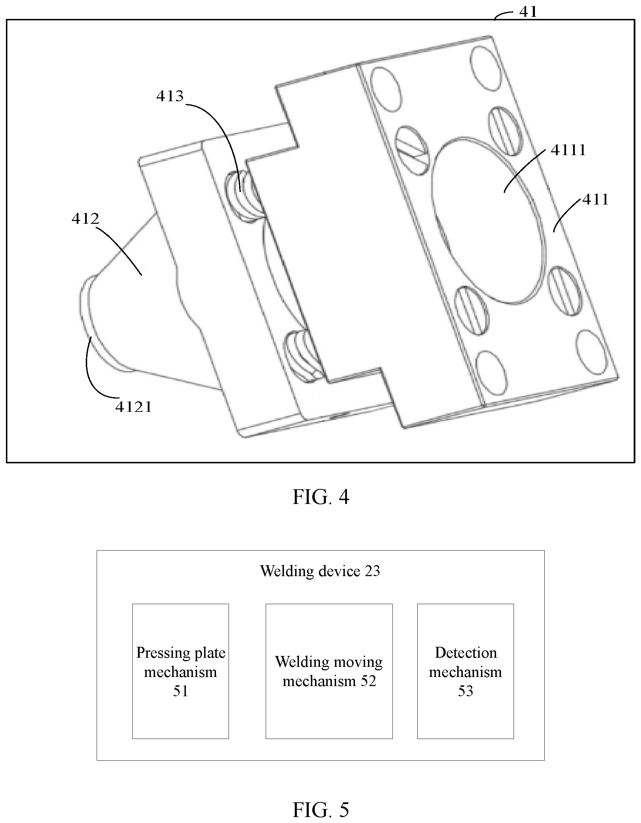

FIG. 4 is a schematic structural diagram of a pressing nozzle assembly according to an embodiment of the present disclosure. As shown in FIG. 4, the pressing nozzle assembly 41 includes a pressing plate 411, a pressing nozzle 412, and a buffer member 413, the pressing plate 411 is provided with a first through hole 4111, the pressing nozzle 412 is provided with a second through hole 4121, and the first through hole 4111 communicates with the second through hole 4121.

In the embodiments of the present disclosure, on one hand, the pressing nozzle is expanded and contracted along the pressing direction through the buffer member, which can better adapt to changes in the welding position of the battery along the pressing direction, thereby facilitating close attachment of the terminal post and the busbar assembly under the force of the pressing nozzle, and improving welding quality; on the other hand, the design of each through hole not only provides passages for the detection mechanism and the welding moving mechanism to operate, but also reduces the possibility of high-temperature foreign matters splashed during the welding process adhering to a galvanometer, thereby protecting the galvanometer and extending the service life of the galvanometer.

In some implementations, the welding device 23 further includes a welding moving mechanism and a detection mechanism, where the pressing plate mechanism is configured to press against the busbar assemblies corresponding to the plurality of terminal posts, so that at least one busbar assembly is closely attached to the corresponding terminal post respectively; the detection mechanism is configured to acquire the height feature information of the pressing plate mechanism and the height feature information of the at least one busbar assembly; and the welding moving mechanism is configured to, in a case that the downward pressing result of the pressing plate mechanism indicates that the downward pressing is completed, weld each of the terminal posts and the corresponding busbar assembly based on the target welding coordinates of the terminal post.

Here, the detection mechanism may be any suitable mechanism that implements this function, for example, a profilometer. The profilometer scans the pressing plate mechanism and the busbar assemblies to obtain corresponding height feature information. In some implementations, the number of detection mechanisms may be at least one, for example, 1 or 2.

In some implementations, the detection mechanism includes a profilometer and a light source, where the light source is configured to provide light during a scanning process of the profilometer; and the profilometer is configured to emit laser light to acquire the height feature information of the pressing plate mechanism and the height feature information of the at least one busbar assembly.

Here, the light source is disposed adjacent to the profilometer, so as to provide light during the scanning process of the profilometer. The profilometer may be any suitable profilometer, for example, a three-dimensional profilometer. In this way, on one hand, the light source provides light when the profilometer scans, so as to improve clarity of the scanning result; on the other hand, the height feature information of the pressing plate mechanism and that of each busbar assembly are acquired through the profilometer, which, compared to point-by-point scanning using a rangefinder, not only improves scanning efficiency, but also can more comprehensively and accurately reflect a contour status of the scanned object, meeting scanning requirements of high precision and high speed, thereby improving accuracy of welding coordinates.

In some implementations, the control apparatus sends an acquisition instruction to a detection mechanism, so that the detection mechanism acquires height feature information based on the acquisition instruction. In this way, compared with real-time acquisition, the number of acquisitions is reduced, and hardware consumption is reduced. For acquisition of various height feature information by the detection mechanism, reference may be made to the specific implementation of step S11 described above.

The welding moving mechanism is a movable welding mechanism. The welding mechanism may be any suitable mechanism capable of implementing a welding function, for example, a laser welding mechanism. In some implementations, the welding mechanism includes a laser generator and a galvanometer, the laser generator is configured to generate laser light, the galvanometer is configured to reflect the laser light emitted by the laser generator, and a reflective surface of the galvanometer forms an angle with the laser light emitted by the laser generator. By controlling oscillation of the galvanometer, an emission angle of the laser light reflected by the galvanometer can be changed, so as to expand a range of welding operations through the galvanometer while the position of the laser generator remains fixed.

FIG. 5 is a first schematic structural diagram of a terminal post welding device according to an embodiment of the present disclosure. As shown in FIG. 5, the welding device 23 includes a pressing plate mechanism 51, a welding moving mechanism 52, and a detection mechanism 53.

The pressing plate mechanism 51 presses against busbar assemblies, so that each busbar assembly is closely attached to the corresponding terminal post separately.

The detection mechanism 53 acquires height feature information of the pressing plate mechanism and height feature information of the busbar assemblies.

In a case that a downward pressing result of the pressing plate mechanism 51 indicates that the downward pressing is completed, the welding moving mechanism 52 welds each terminal post and a corresponding busbar assembly separately based on target welding coordinates of each terminal post.

The moving manner of the welding mechanism may be any suitable manner. For example, the welding mechanism is drivingly connected to a moving mechanism to drive the welding mechanism to move to final welding position coordinates of each terminal post separately for welding operations. The moving mechanism may be any suitable mechanism capable of implementing movement, for example, a robot or a cart.

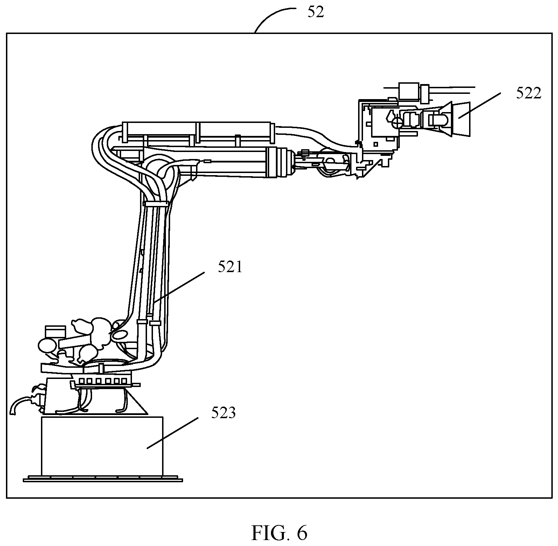

FIG. 6 is a schematic structural diagram of a welding moving mechanism according to an embodiment of the present disclosure. As shown in FIG. 6, the welding moving mechanism 52 includes a moving mechanism 521, a welding mechanism 522, and a base 523, the moving mechanism 521 is fixed on the base 523, and the moving mechanism 521 drives the welding mechanism 522 to move to final welding positions of terminal posts sequentially for welding.

In some implementations, the number of welding moving mechanisms may be at least one, for example, 2. During implementation, the number of welding moving mechanisms may match the number of detection mechanisms. For example, the number of detection mechanisms is 2, and the number of welding moving mechanisms may be 2. During implementation, if a specific detection mechanism is performing a detection operation, a welding moving mechanism corresponding to another detection mechanism may perform a welding operation; or if another detection mechanism is performing a detection operation, a welding moving mechanism corresponding to the detection mechanism may perform a welding operation. In this way, welding efficiency can be improved through alternate operations.

For the process of performing welding operations by the welding device, reference may be made to the specific implementation of step S14 described above.

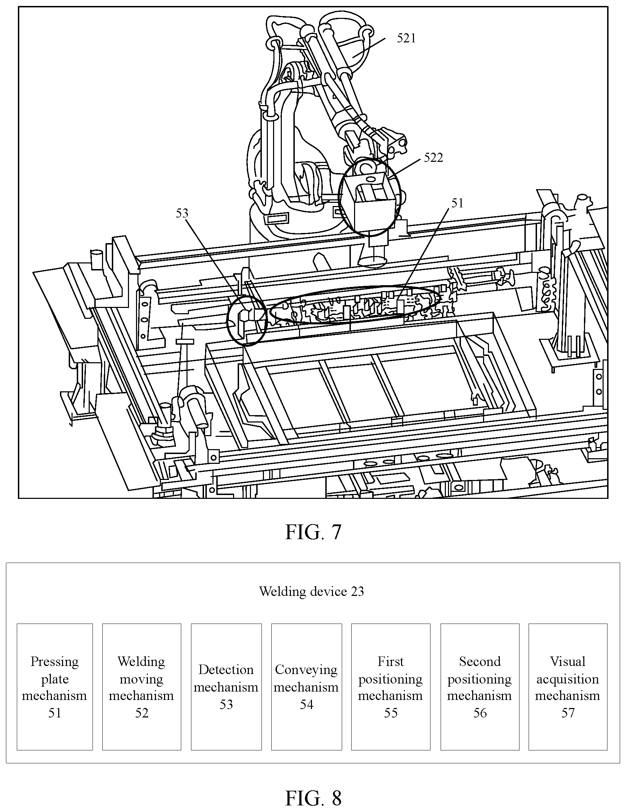

FIG. 7 is a second schematic structural diagram of a terminal post welding device according to an embodiment of the present disclosure. As shown in FIG. 7, the welding device 23 includes a pressing plate mechanism 51, a welding moving mechanism, and a detection mechanism 53, and the welding moving mechanism includes a moving mechanism 521 and a welding mechanism 522.

The control apparatus controls a driving mechanism corresponding to the pressing plate mechanism 51, using the terminal posts as a downward pressing limit, so that the driving mechanism drives the pressing plate mechanism 51 to press against the busbar assemblies corresponding to the terminal posts, to make the busbar assemblies closely attached to the corresponding terminal posts.

After downward pressing of the pressing plate mechanism 51 is completed, the control apparatus performs preliminary verification (including terminal post position verification and deviation angle verification) on the to-be-welded battery, and after the preliminary verification is passed, controls a driving mechanism corresponding to the detection mechanism 53 to drive the detection mechanism 53 to scan sequentially along the Y-axis direction, so as to obtain height feature information of the pressing plate mechanism and height feature information of at least one busbar assembly.

After scanning of the detection mechanism 53 is completed, the control apparatus determines a downward pressing result of the pressing plate mechanism based on the height feature information of the pressing plate mechanism and the height feature information of the at least one busbar assembly, and in a case that the downward pressing result indicates that downward pressing is completed, determines target welding coordinates (including terminal post offset coordinates and height offset information) of each terminal post based on the first terminal post coordinates of each terminal post in the welding station coordinate system and the height feature information of the busbar assembly corresponding to each terminal post, and sends the target welding coordinates of each terminal post to the welding moving mechanism.

The welding moving mechanism determines final welding coordinates of each terminal post (including a welding position and a target welding height of the terminal post) based on the terminal post offset coordinates and the height offset information. The moving mechanism 521 drives the welding mechanism 522 to move to welding positions (that is, X coordinate and Y coordinate) of terminal posts sequentially, and adjusts a height of the welding mechanism 522 based on the target welding height (that is, Z coordinate) of each terminal post, so that the welding mechanism 522 welds each terminal post and the corresponding busbar assembly.

The driving mechanism may be any suitable mechanism capable of implementing this function, for example, a cylinder.

In some implementations, the welding device further includes at least one of the following: a conveying mechanism, configured to convey the to-be-welded battery to a welding area; where the to-be-welded battery includes each terminal post; a first positioning mechanism, configured to fix the to-be-welded battery in the welding area; a second positioning mechanism, configured to fix at least one busbar assembly on a corresponding terminal post; and a visual acquisition mechanism, configured to acquire an image of a mark point corresponding to the to-be-welded battery, where the image is used for determining the first terminal post coordinates of each of the terminal posts in the to-be-welded battery in the welding station coordinate system.

Here, the conveying mechanism may be any suitable mechanism capable of implementing this function. For example, the conveying mechanism includes a driving assembly and a carrying assembly. The carrying assembly is configured to carry the to-be-welded battery, and the driving assembly drives the carrying assembly to move, so as to move the to-be-welded battery on the carrying assembly. The driving assembly may be a conveying line, an automated guided vehicle (Automated Guided Vehicle, AGV), or the like.

The first positioning mechanism may be any suitable mechanism that implements this function. For example, the first positioning mechanism includes a positioning member and a driving member, and the driving member is configured to drive the positioning member to detachably insert into or leave a positioning hole of the to-be-welded battery. During implementation, different batteries are fixed by adjusting a position and/or insertion depth of the positioning member.

The second positioning mechanism may be any suitable mechanism that implements this function, for example, a positioning member. The positioning member is used to fix positions of the terminal posts and the busbar assemblies, so as to reduce the possibility of false welding, off-center welding, and the like caused by changes in relative positions of the busbar assemblies and the terminal posts during subsequent welding processes.

Here, the visual acquisition mechanism may be any suitable mechanism capable of implementing this function, for example, a CCD (Charge Coupled Device, charge coupled device) camera. During implementation, after the to-be-welded battery is fixed by the first positioning mechanism, the control apparatus sends an acquisition instruction to the visual acquisition mechanism, so that the visual acquisition mechanism acquires an image of the mark point based on the acquisition instruction.

For the manner of determining the first terminal post coordinates, reference may be made to the specific implementation of step S141 described above.

FIG. 8 is a third schematic structural diagram of a terminal post welding device according to an embodiment of the present disclosure. As shown in FIG. 8, the welding device 23 includes a pressing plate mechanism 51, a welding moving mechanism 52, a detection mechanism 53, a conveying mechanism 54, a first positioning mechanism 55, a second positioning mechanism 56, and a visual acquisition mechanism 57.

The conveying mechanism 54 conveys a to-be-welded battery to a welding area.

The first positioning mechanism 55 fixes the to-be-welded battery in the welding area.

The second positioning mechanism 56 fixes each busbar assembly on a corresponding terminal post.

The visual acquisition mechanism 57 acquires an image of a mark point corresponding to the to-be-welded battery.

The pressing plate mechanism 51 presses against busbar assemblies, so that each busbar assembly is closely attached to the corresponding terminal post separately.

The detection mechanism 53 acquires height feature information of the pressing plate mechanism and height feature information of the busbar assemblies.

In a case that a downward pressing result of the pressing plate mechanism 51 indicates that the downward pressing is completed, the welding moving mechanism 52 welds each terminal post and a corresponding busbar assembly separately based on target welding coordinates of each terminal post.

In the embodiments of the present disclosure, first, the to-be-welded battery is fixed to the to-be-welded welding area by the first positioning mechanism, which meets the fixing requirements of different types of batteries and reduces the possibility of the battery moving during the welding process, thereby facilitating improvement of welding stability and implementing flexible welding operations. Second, the busbar assemblies are fixed on the terminal posts through the second positioning mechanism, which reduces the possibility of false welding, off-center welding, and the like caused by movement of the busbar assemblies during the welding process. Third, the visual acquisition mechanism acquires only the image of the mark points to accurately determine the terminal post coordinates of each terminal post in the welding station coordinate system, without the need to capture images of the terminal posts one by one to determine the terminal post coordinates of each terminal post in the welding station coordinate system, which ensures accuracy of the terminal post coordinates while improving determination efficiency. Finally, through cooperation between the conveying mechanism, the positioning mechanisms, the pressing plate mechanism, and the welding moving mechanism, the battery can be welded smoothly, which improves welding efficiency while improving welding quality.

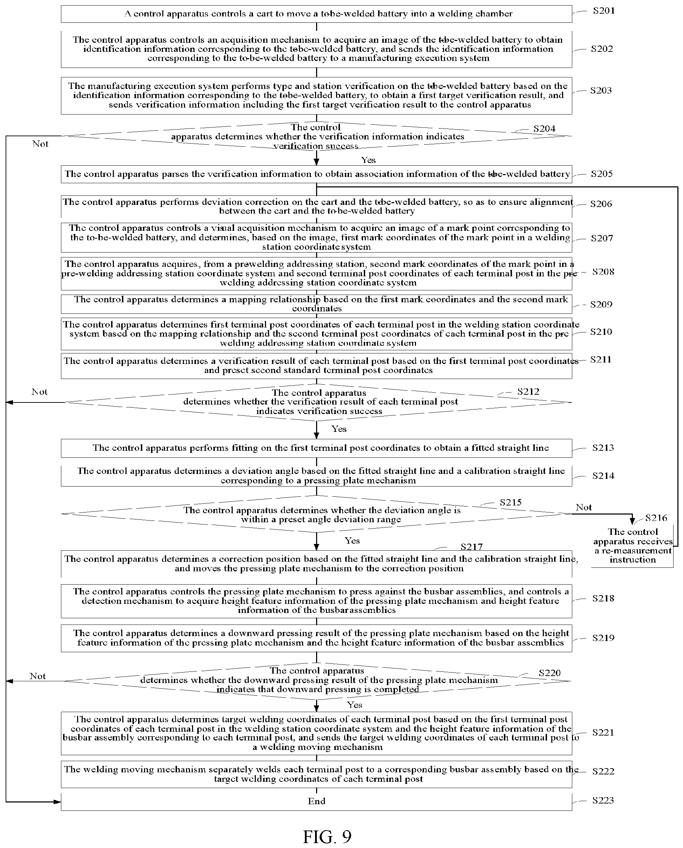

FIG. 9 is a second schematic flowchart of an implementation of a welding method for terminal posts according to an embodiment of the present disclosure. As shown in FIG. 9, the welding method includes step S201 to step S223.

Step S201: A control apparatus controls a cart (corresponding to the conveying mechanism described above) to move a to-be-welded battery into a welding chamber.

Here, the control apparatus may be any suitable apparatus, for example, a PLC + upper computer.

Step S202: The control apparatus controls an acquisition mechanism to acquire an image of the to-be-welded battery to obtain identification information corresponding to the to-be-welded battery, and sends the identification information corresponding to the to-be-welded battery to a manufacturing execution system.

Step S203: The manufacturing execution system performs type and station verification on the to-be-welded battery based on the identification information corresponding to the to-be-welded battery, to obtain a first target verification result, and sends verification information including the first target verification result to the control apparatus.

Step S204: The control apparatus determines whether the verification information indicates verification success. If yes, proceed to step S205; otherwise, proceed to step S223.

Step S205: The control apparatus parses the verification information to obtain association information of the to-be-welded battery.

Step S206: The control apparatus performs deviation correction on the cart and the to-be-welded battery, so as to ensure alignment between the cart and the to-be-welded battery.

Step S207: The control apparatus controls a vision acquisition mechanism to acquire an image of a mark point corresponding to the to-be-welded battery, and determines, based on the image, first mark coordinates of the mark point in a welding station coordinate system.

Here, the mark point corresponding to the to-be-welded battery is obtained from association information of the to-be-welded battery.

Step S208: The control apparatus acquires, from a pre-welding addressing station, second mark coordinates of the mark point in a pre-welding addressing station coordinate system and second terminal post coordinates of each terminal post in the pre-welding addressing station coordinate system.

Step S209: The control apparatus determines a mapping relationship based on the first mark coordinates and the second mark coordinates.

Step S210: The control apparatus determines first terminal post coordinates of each terminal post in the welding station coordinate system based on the mapping relationship and the second terminal post coordinates of each terminal post in the pre-welding addressing station coordinate system.

Step S211: The control apparatus determines a verification result of each terminal post based on the first terminal post coordinates and preset second standard terminal post coordinates.

Step S212: The control apparatus determines whether the verification result of each terminal post indicates verification success. If yes, proceed to step S213; otherwise, proceed to step S223.

Step S213: The control apparatus performs fitting on the first terminal post coordinates to obtain a fitted straight line.

Step S214: The control apparatus determines a deviation angle based on the fitted straight line and a calibration straight line corresponding to a pressing plate mechanism.

Step S215: The control apparatus determines whether the deviation angle is within a preset angular deviation range. If yes, proceed to step S217; otherwise, proceed to step S216.

Step S216: The control apparatus receives a re-measurement instruction, and performs step S206.

Here, the re-measurement instruction is an instruction issued after staff has performed troubleshooting and confirmed that there are no errors. The manner of issuing the re-measurement instruction may be any suitable manner, for example, clicking a re-measurement button on a display screen. For another example, a voice re-measurement instruction is issued.

Step S217: The control apparatus determines a correction position based on the fitted straight line and the calibration straight line, and moves the pressing plate mechanism to the correction position.

Step S218: The control apparatus controls the pressing plate mechanism to press against the busbar assemblies, and controls a detection mechanism to acquire height feature information of the pressing plate mechanism and height feature information of the busbar assemblies.

Step S219: The control apparatus determines a downward pressing result of the pressing plate mechanism based on the height feature information of the pressing plate mechanism and the height feature information of the busbar assemblies.

Step S220: The control apparatus determines whether the downward pressing result of the pressing plate mechanism indicates that downward pressing is completed. If yes, proceed to step S221; otherwise, proceed to step S223.

Step S221: The control apparatus determines target welding coordinates of each terminal post based on the first terminal post coordinates of each terminal post in the welding station coordinate system and the height feature information of the busbar assembly corresponding to each terminal post, and sends the target welding coordinates of each terminal post to a welding moving mechanism.

Here, the target welding coordinate includes terminal post offset coordinates and height offset information.

Step S222: The welding moving mechanism separately welds each terminal post and a corresponding busbar assembly based on the target welding coordinates of each terminal post.

Here, the welding moving mechanism compensates the standard welding coordinates based on the terminal post offset coordinates and the height offset information to obtain final welding coordinates of the terminal post, and performs welding operation based on the final welding coordinates of the terminal post.

Step S223: End.

In the embodiments of the present disclosure, first, the to-be-welded battery is verified (for example, type or station) by the manufacturing execution system to improve accuracy of the verification result, so that when the verification is successful, subsequent production processes are performed accurately and efficiently based on the association information of the to-be-welded battery (for example, dimensions, or the number and positions of mark points), thereby improving battery production efficiency; second, the downward pressing result of the pressing plate mechanism is comprehensively determined based on the height feature information of the pressing plate mechanism of the welding device and the height feature information of each busbar assembly, which improves accuracy of the downward pressing result, thereby improving welding precision; third, welding of the busbar assemblies and the terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward; finally, the target welding coordinates of each terminal post are separately determined based on the height feature information of each busbar assembly and the terminal post coordinates of each terminal post, which improves accuracy of the welding coordinates, thereby reducing the possibility of false welding, missed welding, and the like caused by tolerances of the terminal posts in various directions, further improving welding quality and battery yield rate, and meeting production requirements of high timeliness and high efficiency.

It should be understood that, "one embodiment" or "an embodiment" mentioned throughout this specification means that specific features, structures, or characteristics related to the embodiment are included in at least one embodiment of the present disclosure. Therefore, "in one embodiment" or "in an embodiment" that appears throughout this specification does not necessarily refer to the same embodiment. In addition, the specific features, structures, or characteristics may be combined in any suitable manner in one or more embodiments. It should be understood that sequence numbers of processes in various embodiments of the present disclosure do not mean execution sequences. The execution sequences of the processes should be determined based on functions and internal logic of the processes, and should not be construed as any limitation on implementation processes of the embodiments of the present disclosure. The sequence numbers of the above embodiments of the present disclosure are only for description, and do not represent the advantages or disadvantages of the embodiments. It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. Without more constraints, an element preceded by "includes a ..." does not preclude the presence of other identical elements in the process, method, article, or apparatus that includes the element.

In the several embodiments provided in the present disclosure, it should be understood that the disclosed device and method may be implemented in other manners. The described device embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections between components may be implemented through some interfaces. The indirect couplings or communication connections between the devices or units may be implemented in electrical, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments. In addition, functional units in the embodiments of the present disclosure may be all integrated into one processing unit, or each of the units may independently act as one unit, or two or more units are integrated into one unit. The integrated unit may be implemented in a form of hardware, or may be implemented in a form of a software functional unit.

The foregoing descriptions are only embodiments of the present disclosure, but are not intended to limit the protection scope of the present disclosure. Any variation or replacement readily figured out by persons skilled in the art within the technical scope disclosed in the present disclosure shall fall within the protection scope of the present disclosure.

### INDUSTRIAL APPLICABILITY

The present disclosure provides a welding method and welding system for terminal posts. The welding system includes a control apparatus, a manufacturing execution system, and a welding device. The control apparatus is configured to send identification information corresponding to a to-be-welded battery to the manufacturing execution system, and the to-be-welded battery includes a plurality of terminal posts. The manufacturing execution system is configured to determine a first target verification result of the to-be-welded battery based on the identification information corresponding to the to-be-welded battery, and send verification information to the control apparatus; where the verification information includes one of the following: a first target verification result indicating verification failure, a first target verification result indicating verification success, and association information of the to-be-welded battery, and the association information of the to-be-welded battery is determined based on a blueprint corresponding to the to-be-welded battery. The control apparatus is further configured to: in a case that the first target verification result indicates verification success and a downward pressing result of a pressing plate mechanism in the welding device indicates that downward pressing is completed, send target welding coordinates of each of the terminal posts to the welding device; where the downward pressing result of the pressing plate mechanism is determined based on height feature information of the pressing plate mechanism and height feature information of busbar assemblies corresponding to the plurality of terminal posts, the target welding coordinates of the terminal post are determined based on first terminal post coordinates of the terminal post in a welding station coordinate system and the height feature information of the busbar assembly corresponding to the terminal post, and the first terminal post coordinates of the terminal post in the welding station coordinate system are determined based on the association information of the to-be-welded battery. The welding device is configured to weld each terminal post and a corresponding busbar assembly separately based on the target welding coordinates of each terminal post. In this way, first, the to-be-welded battery is verified (for example, type or station) by the manufacturing execution system to improve accuracy of the verification result, so that when the verification is successful, subsequent production processes are performed accurately and efficiently based on the association information of the to-be-welded battery (for example, dimensions, or the number and positions of mark points), thereby improving battery production efficiency; second, the downward pressing result of the pressing plate mechanism is comprehensively determined based on the height feature information of the pressing plate mechanism of the welding device and the height feature information of each busbar assembly, which improves accuracy of the downward pressing result, thereby improving welding precision; third, welding of the busbar assemblies and the terminal posts is performed only in a case that the downward pressing result of the pressing plate mechanism indicates that downward pressing is completed, which reduces the possibility of false welding, missed welding, and the like caused by the pressing plate mechanism being pressed off-center or not being fully pressed downward; finally, the target welding coordinates of each terminal post are separately determined based on the height feature information of each busbar assembly and the terminal post coordinates of each terminal post, which improves accuracy of the welding coordinates, thereby reducing the possibility of false welding, missed welding, and the like caused by tolerances of the terminal posts in various directions, further improving welding quality and battery yield rate, and meeting production requirements of high timeliness and high efficiency.

## Claims

1. A welding system for terminal posts, the welding system comprising a control apparatus, a manufacturing execution system, and a welding device, wherein
the control apparatus is configured to send identification information corresponding to a to-be-welded battery to the manufacturing execution system; wherein the to-be-welded battery comprises a plurality of terminal posts;
the manufacturing execution system is configured to determine a first target verification result of the to-be-welded battery based on the identification information corresponding to the to-be-welded battery, and send verification information to the control apparatus; wherein the verification information comprises one of the following: a first target verification result indicating verification failure, a first target verification result indicating verification success, and association information of the to-be-welded battery, and the association information of the to-be-welded battery is determined based on a blueprint corresponding to the to-be-welded battery;
the control apparatus is further configured to: in a case that the first target verification result indicates verification success and a downward pressing result of a pressing plate mechanism in the welding device indicates that downward pressing is completed, send target welding coordinates of each of the terminal posts to the welding device; wherein the downward pressing result of the pressing plate mechanism is determined based on height feature information of the pressing plate mechanism and height feature information of busbar assemblies corresponding to the plurality of terminal posts, the target welding coordinates of the terminal post are determined based on first terminal post coordinates of the terminal post in a welding station coordinate system and the height feature information of the busbar assembly corresponding to the terminal post, and the first terminal post coordinates of the terminal post in the welding station coordinate system are determined based on the association information of the to-be-welded battery; and
the welding device is configured to separately weld each of the terminal posts and a corresponding busbar assembly based on the target welding coordinates of the terminal post.

2. The welding system according to claim 1, wherein the welding device further comprises a welding moving mechanism and a detection mechanism, wherein
the pressing plate mechanism is configured to press against the busbar assemblies corresponding to the plurality of terminal posts, so that at least one busbar assembly is closely attached to a corresponding terminal post respectively;
the detection mechanism is configured to acquire the height feature information of the pressing plate mechanism and height feature information of the at least one busbar assembly; and
the welding moving mechanism is configured to: in a case that the downward pressing result of the pressing plate mechanism indicates that downward pressing is completed, weld each of the terminal posts and the corresponding busbar assembly based on the target welding coordinates of the terminal post.

3. The welding system according to claim 2, wherein the pressing plate mechanism comprises at least one pressing nozzle assembly, the number of pressing nozzle assemblies matches the number of terminal posts, the pressing nozzle assembly comprises a pressing plate, a pressing nozzle, and a buffer member, the pressing nozzle is configured to press against a corresponding busbar assembly, the height feature information of the pressing plate mechanism comprises height feature information of each pressing plate and height feature information of each pressing nozzle, wherein
the pressing plate is provided with a first through hole, and the first through hole is configured to allow the detection mechanism to enter the first through hole to acquire the height feature information of the pressing plate and the height feature information of the pressing nozzle;
the pressing nozzle is provided with a second through hole communicating with a corresponding first through hole, and the second through hole is configured to allow the detection mechanism to enter the first through hole to acquire the height feature information of the corresponding busbar assembly; and
the buffer member is disposed between the pressing nozzle and the pressing plate, and is capable of expanding and contracting along a pressing direction of the pressing nozzle.

4. The welding system according to claim 2 or 3, wherein the detection mechanism comprises a profilometer and a light source, wherein
the light source is configured to provide light during a scanning process of the profilometer; and
the profilometer is configured to emit laser light to acquire the height feature information of the pressing plate mechanism and the height feature information of the at least one busbar assembly.

5. The welding system according to any one of claims 1 to 4, wherein the welding device further comprises at least one of the following:
a conveying mechanism, configured to convey the to-be-welded battery to a welding area;
a first positioning mechanism, configured to fix the to-be-welded battery in the welding area;
a second positioning mechanism, configured to fix at least one busbar assembly on a corresponding terminal post; and
a visual acquisition mechanism, configured to acquire an image of a mark point corresponding to the to-be-welded battery, wherein the image is used for determining first terminal post coordinates of each of the terminal posts in the welding station coordinate system.

6. A welding method for terminal posts, applied to a control apparatus, wherein the welding method comprises:
controlling a detection mechanism to acquire height feature information of a pressing plate mechanism and height feature information of at least one busbar assembly; wherein each of the busbar assemblies is separately fixed on one pair of terminal posts of a to-be-welded battery;
determining a downward pressing result of the pressing plate mechanism based on the height feature information of the pressing plate mechanism and the height feature information of the at least one busbar assembly;
in a case that the downward pressing result of the pressing plate mechanism indicates that downward pressing is completed, for each terminal post, determining target welding coordinates of the terminal post based on first terminal post coordinates of the terminal post in a welding station coordinate system and height feature information of a busbar assembly corresponding to the terminal post; and
sending the target welding coordinates of each terminal post to a welding moving mechanism, so that the welding moving mechanism separately welds each terminal post and the corresponding busbar assembly based on the target welding coordinates.

7. The welding method according to claim 6, wherein the pressing plate mechanism comprises at least one pressing nozzle assembly, the number of pressing nozzle assemblies matches the number of terminal posts, the pressing nozzle assembly comprises a pressing plate, a pressing nozzle, and a buffer member, and the height feature information of the pressing plate mechanism comprises height feature information of each pressing plate and height feature information of each pressing nozzle; and
the determining a downward pressing result of the pressing plate mechanism based on the height feature information of the pressing plate mechanism and the height feature information of the at least one busbar assembly comprises:
for each terminal post, determining a downward pressing result of a pressing nozzle corresponding to the terminal post, based on height feature information of a busbar assembly corresponding to the terminal post, height feature information of the pressing nozzle corresponding to the terminal post, and height feature information of a pressing plate corresponding to the terminal post; and
determining the downward pressing result of the pressing plate mechanism based on the downward pressing result of the pressing nozzle corresponding to each terminal post.

8. The welding method according to claim 7, wherein the determining the downward pressing result of the pressing plate mechanism based on the downward pressing result of the pressing nozzle corresponding to each terminal post comprises:
in a case that the downward pressing result of the pressing nozzle corresponding to each terminal post all indicates that downward pressing is completed, using a first downward pressing result indicating that downward pressing is completed as the downward pressing result of the pressing plate mechanism; and
in a case that a downward pressing result of a pressing nozzle corresponding to at least one terminal post indicates that downward pressing is not completed, using a second downward pressing result indicating that downward pressing is not completed as the downward pressing result of the pressing plate mechanism.

9. The welding method according to any one of claims 6 to 8, wherein the determining target welding coordinates of the terminal post based on first terminal post coordinates of the terminal post in a welding station coordinate system and height feature information of a busbar assembly corresponding to the terminal post comprises:
determining terminal post offset coordinates based on the first terminal post coordinates of the terminal post in the welding station coordinate system and preset first standard terminal post coordinates;
determining height offset information based on the height feature information of the busbar assembly corresponding to the terminal post and a preset standard terminal post height; and
determining the target welding coordinates of the terminal post based on the terminal post offset coordinates and the height offset information.

10. The welding method according to any one of claims 6 to 9, wherein the controlling a detection mechanism to acquire height feature information of a pressing plate mechanism and height feature information of at least one busbar assembly comprises:
determining a second target verification result of the to-be-welded battery based on the first terminal post coordinates of each terminal post in the welding station coordinate system; and
in a case that the second target verification result of the to-be-welded battery indicates verification success, controlling the detection mechanism to acquire the height feature information of the pressing plate mechanism and the height feature information of the at least one busbar assembly.

11. The welding method according to claim 10, wherein the determining a second target verification result of the to-be-welded battery based on the first terminal post coordinates of each terminal post in the welding station coordinate system comprises:
for each terminal post, determining the first terminal post coordinates of the terminal post in the welding station coordinate system based on second terminal post coordinates of the terminal post in a pre-welding addressing station coordinate system and a mapping relationship, and determining a verification result of the terminal post based on the first terminal post coordinates and preset second standard terminal post coordinates; wherein the mapping relationship is determined based on first mark coordinates of a mark point corresponding to the to-be-welded battery in the welding station coordinate system and second mark coordinates of the mark point in the pre-welding addressing station coordinate system; and
determining the second target verification result of the to-be-welded battery based on the verification result of each terminal post.

12. The welding method according to claim 11, wherein the determining the first terminal post coordinates of the terminal post in the welding station coordinate system based on second terminal post coordinates of the terminal post in a pre-welding addressing station coordinate system and a mapping relationship comprises:
determining the first mark coordinates of the mark point in the welding station coordinate system based on an image that is of the mark point corresponding to the to-be-welded battery and that is acquired by a visual acquisition mechanism;
determining the mapping relationship based on the first mark coordinates of the mark point in the welding station coordinate system and the second mark coordinates of the mark point in the pre-welding addressing station coordinate system; and
converting the second terminal post coordinates of the terminal post in the pre-welding addressing station coordinate system by using the mapping relationship to obtain the first terminal post coordinates of the terminal post in the welding station coordinate system.

13. The welding method according to claim 11 or 12, wherein the determining the second target verification result of the to-be-welded battery based on the verification result of each terminal post comprises:
in a case that a verification result of at least one terminal post indicates verification failure, using a first verification result indicating verification failure as the second target verification result of the to-be-welded battery; and
in a case that the verification result of each terminal post indicates verification success, determining the second target verification result of the to-be-welded battery based on the first terminal post coordinates of each terminal post in the welding station coordinate system and a calibration straight line corresponding to the pressing plate mechanism.

14. The welding method according to claim 13, wherein the determining the second target verification result of the to-be-welded battery based on the first terminal post coordinates of each terminal post in the welding station coordinate system and a calibration straight line corresponding to the pressing plate mechanism comprises:
generating a fitted straight line based on the first terminal post coordinates of each terminal post in the welding station coordinate system;
determining a deviation angle based on the fitted straight line and the calibration straight line; and
determining the second target verification result of the to-be-welded battery based on the deviation angle.

15. The welding method according to claim 14, wherein the determining the second target verification result of the to-be-welded battery based on the deviation angle comprises:
in a case that the deviation angle is within a preset angle deviation range, using a second verification result indicating verification success as the second target verification result of the to-be-welded battery; and
in a case that the deviation angle is not within the angle deviation range, determining the second target verification result of the to-be-welded battery based on next first terminal post coordinates of each terminal post in the welding station coordinate system.

16. The welding method according to claim 14 or 15, wherein in a case that the deviation angle is within the angle deviation range, the welding method further comprises:
determining a correction position based on the fitted straight line and the calibration straight line; and
controlling the pressing plate mechanism to move to the correction position.
